# EUROPEAN PATENT APPLICATION

(11) **EP 4 353 343 A1**
(43) Date of publication of application: **17.04.2024**
(21) Application number: 23203021.3
(22) Date of filing: 11.10.2023
(51) Int. Cl.: A63F 13/52, A63F 13/577, G06T 15/60

(54) **GAME PROGRAM, GAME SYSTEM AND GAME CONTROL METHOD**

(30) Priority: 11.10.2022 JP 2022162946
(71) Applicant: Nintendo Co., Ltd., Kyoto 601-8501 (JP)
(72) Inventor: EN, Yuki, Kita-ku, Osaka (JP); JIN, Jun Seung, Kita-ku, Osaka (JP)
(74) Representative: Bardehle Pagenberg Partnerschaft mbB Patentanwälte Rechtsanwälte

(57) **Abstract**

A non-limiting example game system includes a main body apparatus, and the main body apparatus executes a virtual game, and a game screen is displayed on a display. A player character, a first fellow character and background objects such as the ground, trees and rocks are displayed in the game screen. A judgment object of a rectangular parallelepiped is set to the player character, and it is judged whether line segments each connecting each of multiple judgment points that are set to vertices of the rectangular parallelepiped to a position of a virtual camera collide with the background object, respectively. When the number of the line segments that collide with the background object is two or more, it is judged that a silhouette of the player character is to be displayed. If it is judged that the silhouette of the player character is to be displayed, a silhouette of a part or whole of the player character that is hidden behind the background object when viewed from the virtual camera is displayed on a surface of the background object.

## Description

The present invention relates to a game program, a game system and a game control method, and more specifically, relates to a game program, a game system and a game control method, in which a player moves a player character in a virtual space to advance a virtual game.

### INTRODUCTION

The technology that displays a silhouette when an object is hidden behind something is known.

An example of a related art is disclosed in the Japanese Patent Application Laying-open No. 2018-110659 laid-open on July 19, 2018 (literature 1). In this literature 1, it is disclosed that a silhouette of another object hidden behind a certain object is displayed using a Z-buffer.

Since such a silhouette is game expression not existing in the real world, it may be desired to avoid displaying the silhouette as much as possible depending on the worldview of the game. However, if attempting to calculate how much of the surface area of the certain object is hidden using the Z-buffer, for example, the processing may become complicated.

### SUMMARY

Therefore, it is a primary object of the present invention to provide a novel game program, game system and game control method.

Moreover, it is another object of the present invention to provide a game program, game system and game control method, capable of suppressing a display opportunity of a silhouette by simple processing.

### (Embodiment 1)

The embodiment 1 is a game program executable by an information processing apparatus comprising one or more processors, wherein the game program causes the one or more processors of the information processing apparatus to execute: moving a player character in a virtual space based on an operation input of a player; moving, according to movement of the player character, multiple first judgment points set to positions based on the player character; generating, based on a virtual camera in the virtual space, a display image including the player character and one or more first objects; executing collision judgment whether line segments each connecting each of the multiple first judgment points to a position corresponding to the virtual camera collide with the one or more first objects, respectively; and generating, based on a result of the collision judgment, a display image including a silhouette corresponding to a part of the player character hidden behind the one or more first objects when viewed from the virtual camera.

According to the embodiment 1, it is possible to suppress a display opportunity of a silhouette by simple processing.

### (Embodiment 2)

The embodiment 2 is the game program according to the embodiment 1, wherein the game program causes the one or more processors to execute determining a shape of the silhouette to be displayed based on a result of a front-rear judgment that is different from the collision judgment.

According to the embodiment 2, it is possible to perform judgment whether the silhouette is to be displayed and determination of the shape itself of the silhouette to be displayed by respective suitable means.

### (Embodiment 3)

The embodiment 3 is the game program according to the embodiment 1 or the embodiment 2, wherein the game program causes the one or more processors to execute moving, according to the movement of the player character, an invisible first judgment object that is invisible by a player and has the multiple first judgment points.

According to the embodiment 3, a movement control of the first judgment points is easy.

### (Embodiment 4)

The embodiment 4 is the game program according to the embodiment 3, wherein the invisible first judgment object is a rectangular parallelepiped, the invisible first judgment object having each of the multiple judgment points at each of respective vertices of the rectangular parallelepiped, wherein the game program causes the one or more processors to execute generating the display image including the silhouette when the number of line segments that are judged to collide is two or more as a result of the collision judgment.

According to the embodiment 4, since it is judged that the silhouette is to be displayed based on the number of line segments judged to collide with one or more first objects, it is possible to judge easily.

### (Embodiment 5)

The embodiment 5 is the game program according to any one of the embodiment 1 to the embodiment 4, wherein the game program causes the one or more processors to execute: generating the display image including a second object together with the player character and the one or more first objects in the virtual space; moving, according to a movement of the second object, multiple second judgment points that are set to positions based on the second object so as to surround the second object; further executing collision judgment whether line segments each connecting each of the multiple second judgment points to the position corresponding to the virtual camera collide with the one or more first objects, respectively; moving, when a predetermined condition is satisfied, the player character together with the second object in a combined state that at least a part of the player character is overlapped or contacted with the second object while maintaining the combined state; moving, according to movement of the player character and the second object, multiple third judgment points that are set positions based on the player character and the second object in the combined state; further executing collision judgment whether line segments each connecting each of the multiple third judgment points to the position corresponding to the virtual camera collide with the one or more first objects, respectively; and generating, based on the collision judgment, the display image including the silhouette corresponding to a portion of both the player character and the second object hidden behind the one or more first objects when viewed from the virtual camera.

According to the embodiment 5, in a separate state that the player character and the second object are not in the combined state, it is judged whether the player character and the second object are brought into contact with the first objects, respectively by using respective sets of the judgment points; however, in the combined state, the collision is judged by using a single set of judgment points, and therefore, it is possible to suppressing the processing from becoming complex.

### (Embodiment 6)

The embodiment 6 is the game program according to the embodiment 5, wherein the third judgment points are the same as the first judgment points.

According to the embodiment 6, since the third judgment points are the same as the first judgment points, it is possible to use common judgment points in the separate state and the combined state.

### (Embodiment 7)

The embodiment 7 is the game program according to the embodiment 5 or the embodiment 6, wherein the game program causes the one or more processors to execute generating the display image including the payer character and silhouette of the second object when the line segments each connecting each of the multiple third judgment points to the position corresponding to the virtual camera collide with one or more first objects in the combined state.

According to the embodiment 7, the collision is judged using a single set of the judgment points and the silhouette of the player character and the second object are displayed, and therefore, it is possible to suppressing the processing from becoming complex.

### (Embodiment 8)

The embodiment 8 is the game program according to the embodiment 6, wherein the game program causes the one or more processors to execute: further moving, according to movement of the second object, an invisible second judgment object that is invisible by the player and has the multiple second judgment points; and moving, according to movement of the player character and the second object, the invisible third judgment object having the multiple third judgment points in the combined state.

According to the embodiment 8, since the third judgment object is moved according to the movement of the player character and the second object, it is possible to suppressing the processing from becoming complex.

### (Embodiment 9)

The embodiment 9 is the gam program according to any one of the embodiment 1 to the embodiment 8, wherein the game program causes the one or more processors to execute: judging, based on a result of the collision judgment, whether the display image including the silhouette is to be generated; and starting generation of the display image including the silhouette after elapsing a predetermined time period when it is determined that the display image including the silhouette is to be generated.

According to the embodiment 9, since the display image including the silhouette is generated after a predetermined time period when it is judged that the display image including the silhouette is to be displayed, it is possible to suppress the silhouette from being displayed in a situation that the player character is temporarily hidden behind the first object.

### (Embodiment 10)

The embodiment 10 is the game program according to any one of the embodiment 1 to the embodiment 9, wherein the game program causes the one or more processors to execute generating the display image so that the silhouette is gradually displayed with a time elapse.

According to the embodiment 10, since the silhouette is gradually displayed with a time elapse, it is possible to avoid the silhouette from being suddenly displayed after the player character is hidden behind the first object to some extent.

### (Embodiment 11)

The embodiment 11 is the game program according to the embodiment 10, wherein the game program causes the one or more processors to execute increasing a rate of decrease in transparency of the silhouette gradually with a time elapse.

According also to the embodiment 11, similar to the tenth embodiment, it is possible to avoid the silhouette from being suddenly displayed after the player character is hidden behind the first object to some extent.

### (Embodiment 12)

The embodiment 12 is a game system comprising one or more processors, wherein in the game processing, the one or more processors is configured to execute: moving a player character in a virtual space based on an operation input of a player; moving, according to movement of the player character, multiple first judgment points set to positions based on the player character; generating, based on a virtual camera in the virtual space, a display image including the player character and one or more first objects; executing collision judgment whether line segments each connecting each of the multiple first judgment points to a position corresponding to the virtual camera collide with the one or more first objects, respectively; and generating, based on a result of the collision judgment, a display image including a silhouette corresponding to a part of the player character hidden behind the one or more first objects when viewed from the virtual camera.

### (Embodiment 13)

The embodiment 13 is a game apparatus comprising one or more processors, wherein in the game processing, the one or more processors is configured to execute: moving a player character in a virtual space based on an operation input of a player; moving, according to movement of the player character, multiple first judgment points set to positions based on the player character; generating, based on a virtual camera in the virtual space, a display image including the player character and one or more first objects; executing collision judgment whether line segments each connecting each of the multiple first judgment points to a position corresponding to the virtual camera collide with the one or more first objects, respectively; and generating, based on a result of the collision judgment, a display image including a silhouette corresponding to a part of the player character hidden behind the one or more first objects when viewed from the virtual camera.

### (Embodiment 14)

The embodiment 14 is a game control method of a game apparatus, wherein the game control method comprising: moving a player character in a virtual space based on an operation input of a player; moving, according to movement of the player character, multiple first judgment points set to positions based on the player character; generating, based on a virtual camera in the virtual space, a display image including the player character and one or more first objects; executing collision judgment whether line segments each connecting each of the multiple first judgment points to a position corresponding to the virtual camera collide with the one or more first objects, respectively; and generating, based on a result of the collision judgment, a display image including a silhouette corresponding to a part of the player character hidden behind the one or more first objects when viewed from the virtual camera.

According also to each of the embodiment 12 to the embodiment 14, similar to the embodiment 1, it is possible to suppress a display opportunity of a silhouette by simple processing.

According to the present invention, it is possible to suppress a display opportunity of a silhouette by simple processing.

The above-described objects and other objects, features, aspects and advantages of the present invention will become more apparent from the following detailed description when taken in conjunction with the accompanying drawings.

### BRIEF DESCRIPTION OF THE DRAWINGS

Figure 1 is an illustration view showing a non-limiting example state wherein a left controller and a right controller are attached to a main body apparatus of this embodiment.
Figure 2 is an illustration view showing a non-limiting example state where the left controller and the right controller are detached from the main body apparatus, respectively.
Figure 3 is six orthogonal views showing a non-limiting example main body apparatus shown in Figure 1 and Figure 2.
Figure 4 is sixth orthogonal views showing a non-limiting example left controller shown in Figure 1 and Figure 2.
Figure 5 is sixth orthogonal views showing a non-limiting example right controller shown in Figure 1 and Figure 2.
Figure 6 is a block diagram showing a non-limiting example internal configuration of the main body apparatus shown in Figure 1 and Figure 2.
Figure 7 is a block diagram showing non-limiting example internal configurations of the main body apparatus, the left controller and the right controller shown in Figure 1 and Figure 2.
Figure 8 is a view showing non-limiting first example game screen of the embodiment.
Figure 9 is a view showing non-limiting second example game screen of the embodiment.
Figure 10 is a view showing non-limiting third example game screen of the embodiment.
Figure 11A is a view showing a non-limiting example first judgment object that is set to a player character and Figure 11B is a view showing a non-limiting example second judgment object that is set to a first fellow character.
Figure 12 is a view showing non-limiting example line segments each connecting each of multiple judgment points set to the first judgment object of the player character and a position of a virtual camera in a virtual space.
Figure 13 is a view showing non-limiting fourth example game screen of the embodiment.
Figure 14 is a view showing non-limiting fifth example game screen of the embodiment.
Figure 15 is a view showing non-limiting sixth example game screen of the embodiment.
Figure 16 is a view showing a non-limiting example memory map of a DRAM of the main body apparatus shown in Figure 6.
Figure 17 is a flowchart showing non-limiting example overall processing of a processor(s) of the main body apparatus shown in Figure 6.
Figure 18 is a flowchart showing a first part of non-limiting example game control processing of the processor(s) of the main body apparatus shown in Figure 6.
Figure 19 is a flowchart showing a second part of the non-limiting example game control processing of the processor(s) of the main body apparatus shown in Figure 6, following Figure 18.
Figure 20 is a flowchart showing a third part of the non-limiting example game control processing of the processor(s) of the main body apparatus shown in Figure 6, following Figure 19.
Figure 21 is a flowchart showing a fourth part of the non-limiting example game control processing of the processor(s) of the main body apparatus shown in Figure 6, following Figure 18 - Figure 20.
Figure 22 is a flowchart showing a part of non-limiting example silhouette display determination processing of the processor(s) of the main body apparatus shown in Figure 6.
Figure 23 is a flowchart showing another part of the non-limiting example silhouette display determination processing of the processor(s) of the main body apparatus shown in Figure 6, following Figure 22.
Figure 24A is a view showing another non-limiting combined state of the player character and the fellow character, and Figure 24B is a view showing still other non-limiting combined state of the player character and the fellow character
Figure 25 is a view showing a non-limiting example judgment object in the combined state of the player character and the fellow character.
Figure 26 is a view showing non-limiting seventh example game screen of the embodiment.
Figure 27 is a view showing non-limiting eighth example game screen of the embodiment.

### DETAILED DESCRIPTION OF NON-LIMITING EXAMPLE EMBODIMENTS

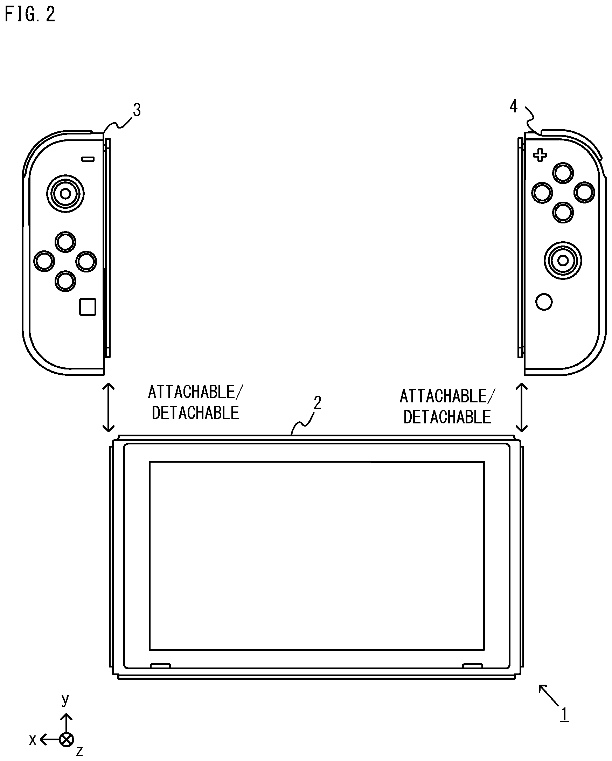

A non-limiting example game system according to an exemplary embodiment will be described in the following. The non-limiting example game system 1 according to the embodiment comprises a main body apparatus (an information processing apparatus that functions as a game apparatus main body in the embodiment) 2, a left controller 3 and a right controller 4. The left controller 3 and the right controller 4 are attachable to or detachable from the main body apparatus 2, respectively. That is, the game system 1 can be used as a unified apparatus formed by attaching each of the left controller 3 and the right controller 4 to the main body apparatus 2. Moreover, in the game system 1, the main body apparatus 2, the left controller 3 and the right controller 4 can also be used as separate bodies (see Figure 2). In the following, the hardware structure of the game system 1 according to the embodiment will be described, and then, the control of the game system 1 of the embodiment will be described.

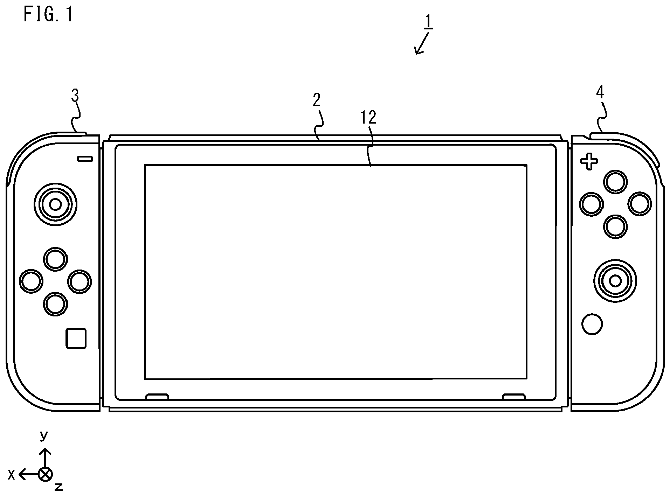

Figure 1 is an illustration view showing an example of a state where the left controller 3 and the right controller 4 are attached to the main body apparatus 2. As shown in Figure 1, the left controller 3 and the right controller 4 is respectively attached to the main body apparatus 2, thereby to be unified it. The main body apparatus 2 is an apparatus for performing various processing (game processing, for example) in the game system 1. The main body apparatus 2 comprises a display 12. Each of the left controller 3 and the right controller 4 is a device comprising an operation section with which a user provides inputs.

Figure 2 is an illustration view showing an example of a state where the left controller 3 and the right controller 4 are detached from the main body apparatus 2, respectively. As shown in Figure 1 and Figure 2, each of the left controller 3 and the right controller 4 is attachable to and detachable from the main body apparatus 2. In addition, it should be noted that the left controller 3 and the right controller 4 may be referred to collectively as a "controller" in the following.

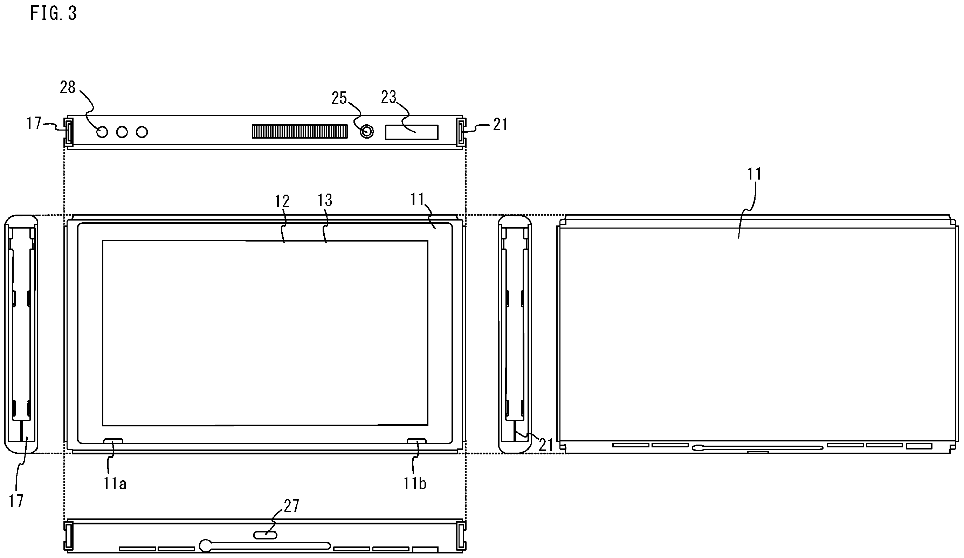

Figure 3 is six orthogonal views showing an example of the main body apparatus 2. As shown in Figure 3, the main body apparatus 2 comprises a housing 11 having an approximately plate-shape. In the embodiment, a main surface (in other words, a surface on a front side, that is, a surface on which the display 12 is provided) of the housing 11 has a generally rectangular shape.

In addition, a shape and a size of the housing 11 are optional. As an example, the housing 11 may be of a portable size. Moreover, the main body apparatus 2 alone or the unified apparatus obtained by attaching the left controller 3 and the right controller 4 to the main body apparatus 2 may be a mobile apparatus. The main body apparatus 2 or the unified apparatus may be a handheld apparatus. The main body apparatus 2 or the unified apparatus may be a handheld apparatus or a portable apparatus.

As shown in Figure 3, the main body apparatus 2 comprises the display 12 that is provided on the main surface of the housing 11. The display 12 displays an image generated by the main body apparatus 2. In the embodiment, the display 12 is a liquid crystal display (LCD). However, the display 12 may be an arbitrary type display.

Moreover, the main body apparatus 2 comprises a touch panel 13 on a screen of the display 12. In the embodiment, the touch panel 13 is of a type that allows a multi-touch input (e.g., a capacitive type). However, the touch panel 13 may be of any type, and for example, the touch panel 13 may be of a type that allows a single-touch input (e.g., a resistive type).

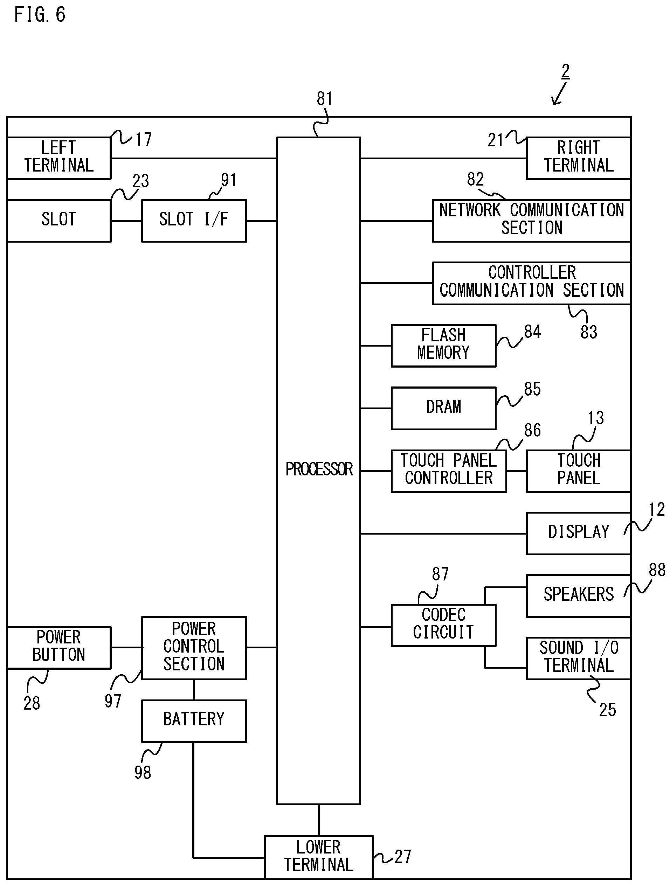

The main body apparatus 2 includes speakers (i.e., speakers 88 shown in Figure 6) within the housing 11. As shown in Figure 3, speaker holes 11a and 11b are formed on the main surface of the housing 11. Then, sounds output from the speakers 88 are emitted through the speaker holes 11a and 11b.

Moreover, the main body apparatus 2 comprises a left terminal 17 that is a terminal for the main body apparatus 2 to perform wired communication with the left controller 3, and a right terminal 21 that is a terminal for the main body apparatus 2 performs wired communication with the right controller 4.

As shown in Figure 3, the main body apparatus 2 comprises a slot 23. The slot 23 is provided on an upper side surface of the housing 11. The slot 23 has a shape to which a predetermined type of storage medium can be attached. The predetermined type of storage medium is, for example, a dedicated storage medium (e.g., a dedicated memory card) for the game system 1 or an information processing apparatus of the same type as the game system 1. The predetermined type of storage medium is used to store, for example, data (e.g., saved data of an application or the like) used by the main body apparatus 2 and/or a program (e.g., a program for an application or the like) executed by the main body apparatus 2. Moreover, the main body apparatus 2 comprises a power button 28.

The main body apparatus 2 comprises a lower terminal 27. The lower terminal 27 is a terminal through which the main body apparatus 2 performs communication with a cradle. In the embodiment, the lower terminal 27 is a USB connector (more specifically, a female connector). When the unified apparatus or the main body apparatus 2 alone is put on the cradle, the game system 1 can display on a stationary monitor an image generated by and output from the main body apparatus 2. Moreover, in the embodiment, the cradle has the function of charging the unified apparatus or the main body apparatus 2 alone that is put on the cradle. Moreover, the cradle has a function of a hub device (specifically, a USB hub).

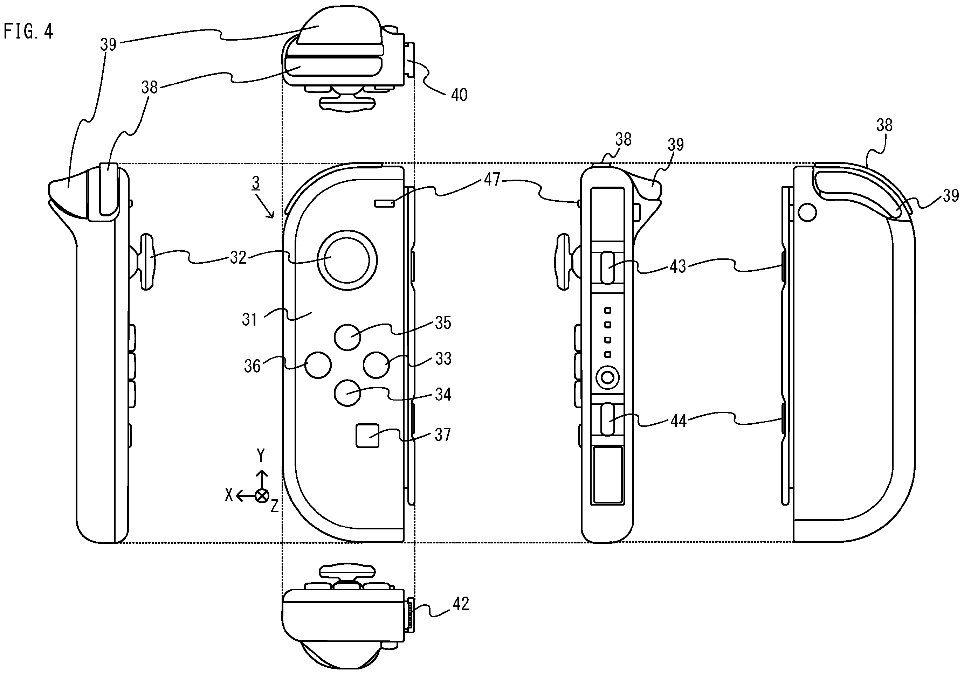

Figure 4 is six orthogonal views showing an example of the left controller 3. As shown in Figure 4, the left controller 3 comprises a housing 31. In the embodiment, the housing 31 has a vertically long shape, that is, is shaped to be long in an up-down direction (i.e., a y-axis direction shown in Figure 1 and Figure 4). In a state where the left controller 3 is detached from the main body apparatus 2, the left controller 3 can also be held in a direction that the left controller 3 is vertically long. The housing 31 has a shape and a size that when held in a direction that the housing 31 is vertically long, the housing 31 can be held with one hand, especially the left hand. Moreover, the left controller 3 can also be held in a direction that the left controller 3 is horizontally long. When held in the direction that the left controller 3 is horizontally long, the left controller 3 may be held with both hands.

The left controller 3 comprises an analog stick 32. As shown in Figure 4, the analog stick 32 is provided on a main surface of the housing 31. The analog stick 32 can be used as a direction input section capable of inputting a direction. The user tilts the analog stick 32 and thereby can input a direction corresponding to a tilted direction (and input a magnitude corresponding to a tilted angle). In addition, the left controller 3 may comprise a cross key or a slide stick capable of performing a slide input, or the like as the direction input section, instead of the analog stick. Moreover, in the embodiment, it is possible to provide an input by pressing the analog stick 32.

The left controller 3 comprises various operation buttons. The left controller 3 comprises four (4) operation buttons 33-36 (specifically, a right direction button 33, a down direction button 34, an up direction button 35 and a left direction button 36) on the main surface of the housing 31. Furthermore, the left controller 3 comprises a record button 37 and a "-" (minus) button 47. The left controller 3 comprises an L-button 38 and a ZL-button 39 in an upper left portion of a side surface of the housing 31. Moreover, the left controller 3 comprises an SL-button 43 and an SR-button 44 on a surface at a side to be attached to the main body apparatus 2 out of side surfaces of the housing 31. These operation buttons are used to input instructions according to various programs (e.g., an OS program and an application program) executed by the main body apparatus 2.

Moreover, the left controller 3 comprises a terminal 42 for the left controller 3 to perform wired communication with the main body apparatus 2.

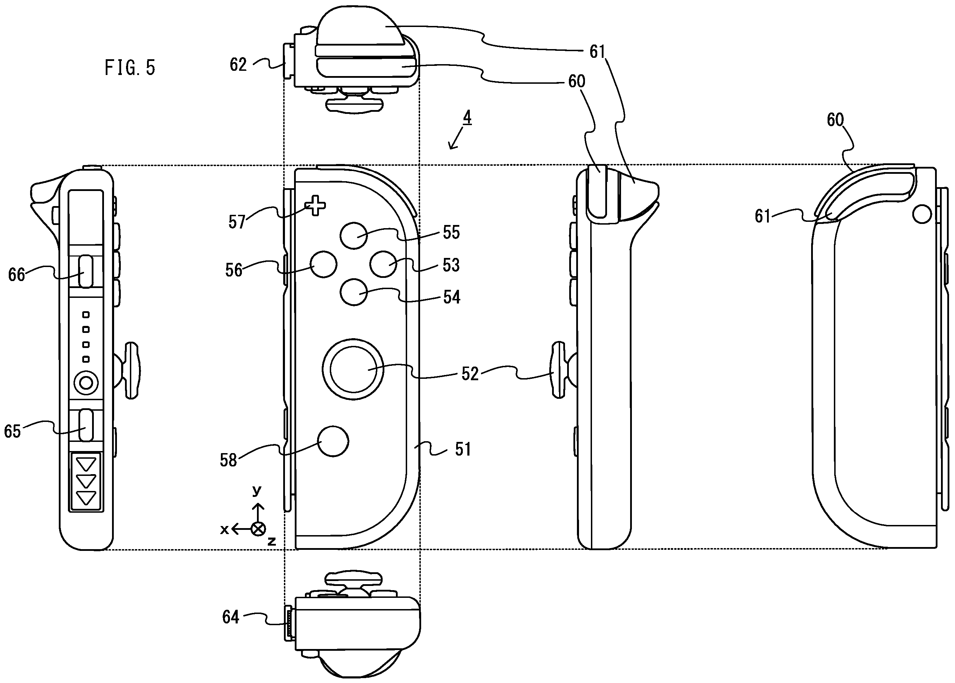

Figure 5 is six orthogonal views showing an example of the right controller 4. As shown in Figure 5, the right controller 4 comprises a housing 51. In the embodiment, the housing 51 has a vertically long shape, that is, a shape long in the up-down direction. In a state where the right controller 4 is detached from the main body apparatus 2, the right controller 4 can also be held in a direction that the right controller 4 is vertically long. The housing 51 has a shape and a size that when held in a direction that the housing 51 is vertically long, the housing 51 can be held with one hand, especially the right hand. Moreover, the right controller 4 can also be held in a direction that the right controller 4 is horizontally long. When held in the direction that the right controller 4 is horizontally long, the right controller 4 may be held with both hands.

Similar to the left controller 3, the right controller 4 comprises an analog stick 52 as a direction input section. In the embodiment, the analog stick 52 has the same configuration as that of the analog stick 32 of the left controller 3. Moreover, the right controller 4 may comprise a cross key or a slide stick capable of performing a slide input, or the like as the direction input section, instead of the analog stick. Moreover, similar to the left controller 3, the right controller 4 comprises four (4) operation buttons 53-56 (specifically, an A-button 53, a B-button 54, an X-button 55 and a Y-button 56) on the main surface of the housing 51. Furthermore, the right controller 4 comprises a "+" (plus) button 57 and a home button 58. Moreover, the right controller 4 comprises an R-button 60 and a ZR-button 61 in an upper right portion of a side surface of the housing 51. Moreover, similar to the left controller 3, the right controller 4 comprises an SL-button 65 and an SR-button 66.

Moreover, the right controller 4 comprises a terminal 64 for the right controller 4 to perform wired communication with the main body apparatus 2.

Figure 6 is a block diagram showing an example of an internal configuration of the main body apparatus 2. The main body apparatus 2 comprises components 81-91, 97 and 98 shown in Figure 6 in addition to components shown in Figure 3. Some of the components 81-91, 97 and 98 may be mounted as electronic components on an electronic circuit board to be accommodated in the housing 11.

The main body apparatus 2 comprises a processor 81. The processor 81 is an information processing section that performs various types of information processing to be performed by the main body apparatus 2, and may be composed only of a CPU (Central Processing Unit), or may be composed of a SoC (System-on-a-chip) having a plurality of functions such as a CPU function and a GPU (Graphics Processing Unit) function. The processor 81 executes an information processing program (e.g., a game program) stored in a storage section (specifically, an internal storage medium such as a flash memory 84, an external storage medium attached to the slot 23, or the like), thereby performing the various types of information processing.

The main body apparatus 2 comprises a flash memory 84 and a DRAM (Dynamic Random Access Memory) 85 as examples of internal storage media incorporated in the main body apparatus 2. The flash memory 84 and the DRAM 85 are connected to the processor 81. The flash memory 84 is a memory mainly used to store various data (or programs) to be saved in the main body apparatus 2. The DRAM 85 is a memory used to temporarily store various data used for information processing.

The main body apparatus 2 comprises a slot interface (hereinafter, abbreviated as "I/F") 91. The slot I/F 91 is connected to the processor 81. The slot I/F 91 is connected to the slot 23, and reads and writes, in accordance with instructions from the processor 81, data from and to the predetermined type of storage medium (e.g., a dedicated memory card) attached to the slot 23.

The processor 81 appropriately reads and writes data from and to the flash memory 84, the DRAM 85 and each of the above storage media, thereby performing the above-described information processing.

The main body apparatus 2 comprises a network communication section 82. The network communication section 82 is connected to the processor 81. The network communication section 82 performs communication (specifically, wireless communication) with external apparatus via a network. In the embodiment, as a first communication manner, the network communication section 82 is connected to a wireless LAN (Local Area Network) to perform communication with external apparatus by a system in conformity with the Wi-Fi standard. Moreover, as a second communication manner, the network communication section 82 performs wireless communication with a further main body apparatus 2 of the same type by a predetermined communication system (e.g., communication based on a unique protocol or infrared light communication). In addition, the wireless communication in the above-described second communication manner achieves a function of enabling so-called "local communication", in which the main body apparatus 2 can perform wireless communication with further main body apparatus 2 placed in a closed LAN, and a plurality of main body apparatus 2 perform communication directly with each other to transmit and receive data.

The main body apparatus 2 comprises a controller communication section 83. The controller communication section 83 is connected to the processor 81. The controller communication section 83 performs wireless communication with the left controller 3 and/or the right controller 4. Although communication system between the main body apparatus 2 and the left controller 3 and the right controller 4 is optional, in the embodiment, the controller communication section 83 performs communication with the left controller 3 and with the right controller 4 in conformity with Bluetooth (registered trademark) standard.

The processor 81 is connected to the left terminal 17, the right terminal 21 and the lower terminal 27. When performing wired communication with the left controller 3, the processor 81 transmits data to the left controller 3 via the left terminal 17 and receives (or acquires) operation data from the left controller 3 via the left terminal 17. Moreover, when performing wired communication with the right controller 4, the processor 81 transmits data to the right controller 4 via the right terminal 21 and receives (or acquires) operation data from the right controller 4 via the right terminal 21. Moreover, when performing communication with the cradle, the processor 81 transmits data to the cradle via the lower terminal 27. Thus, in the embodiment, the main body apparatus 2 can perform both wired communication and wireless communication with each of the left controller 3 and the right controller 4. Moreover, when the unified apparatus formed by attaching the left controller 3 and the right controller 4 to the main body apparatus 2 or the main body apparatus 2 alone is attached to the cradle, the main body apparatus 2 can output data (e.g., display image data and sound data) to the stationary monitor or the like via the cradle.

Here, the main body apparatus 2 can perform communication with a plurality of left controllers 3 simultaneously (in other words, in parallel). Moreover, the main body apparatus 2 can perform communication with a plurality of right controllers 4 simultaneously (in other words, in parallel). Therefore, a plurality of users can simultaneously provide inputs to the main body apparatus 2, each using a set of the left controller 3 and the right controller 4. As an example, a first user can provide an input to the main body apparatus 2 using a first set of the left controller 3 and the right controller 4, and simultaneously, a second user can provide an input to the main body apparatus 2 using a second set of the left controller 3 and the right controller 4.

The main body apparatus 2 comprises a touch panel controller 86 that is a circuit for controlling the touch panel 13. The touch panel controller 86 is connected between the touch panel 13 and the processor 81. Based on a signal from the touch panel 13, the touch panel controller 86 generates, for example, data indicating a position where a touch input is performed, and outputs the data to the processor 81.

Moreover, the display 12 is connected to the processor 81. The processor 81 displays a generated image (e.g., an image generated by performing the above information processing) and/or an externally acquired image on the display 12.

The main body apparatus 2 comprises a codec circuit 87 and speakers (specifically, a left speaker and a right speaker) 88. The codec circuit 87 is connected to the speakers 88 and a sound input/output (I/O) terminal 25 and also connected to the processor 81. The codec circuit 87 is a circuit for controlling an input/output of sound data to and from the speakers 88 and the sound input/output terminal 25.

The main body apparatus 2 comprises a power control section 97 and a battery 98. The power control section 97 is connected to the battery 98 and the processor 81. Moreover, although not shown in Figure 6, the power control section 97 is connected to respective components of the main body apparatus 2 (specifically, components that receive power supplied from the battery 98, the left terminal 17 and the right terminal 21). Based on a command from the processor 81, the power control section 97 controls power supply from the battery 98 to the above-described components.

Moreover, the battery 98 is connected to the lower terminal 27. When an external charging device (e.g., a cradle) is connected to the lower terminal 27, and power is supplied to the main body apparatus 2 via the lower terminal 27, the battery 98 is charged with the supplied power.

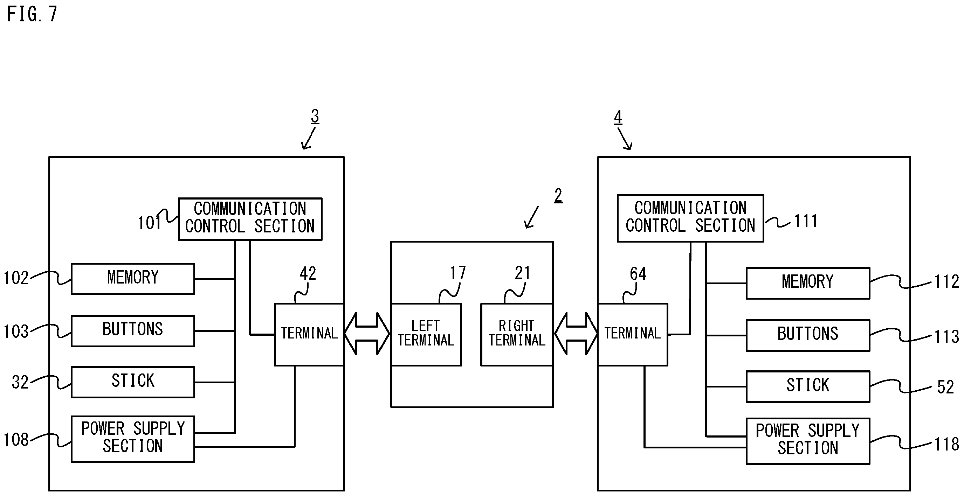

Figure 7 is a block diagram showing examples of internal configurations of the main body apparatus 2, the left controller 3 and the right controller 4. In addition, details of the internal configuration of the main body apparatus 2 are shown in Figure 6 and thus are omitted in Figure 7.

The left controller 3 comprises a communication control section 101 that performs communication with the main body apparatus 2. As shown in Figure 7, the communication control section 101 is connected to components including the terminal 42. In the embodiment, the communication control section 101 can perform communication with the main body apparatus 2 through both wired communication via the terminal 42 and wireless communication not via the terminal 42. The communication control section 101 controls a method of performing communication by the left controller 3 with the main body apparatus 2. That is, when the left controller 3 is attached to the main body apparatus 2, the communication control section 101 performs communication with the main body apparatus 2 via the terminal 42. Moreover, when the left controller 3 is detached from the main body apparatus 2, the communication control section 101 performs wireless communication with the main body apparatus 2 (specifically, the controller communication section 83). The wireless communication between the communication control section 101 and the controller communication section 83 is performed in accordance with Bluetooth (registered trademark) standard, for example.

Moreover, the left controller 3 comprises a memory 102 such as a flash memory. The communication control section 101 is constituted by a microcomputer (also referred to as a microprocessor), for example, and executes firmware stored in the memory 102, thereby performing various processing.

The left controller 3 comprises buttons 103 (specifically, the buttons 33-39, 43, 44 and 47). Further, the left controller 3 comprises the analog stick (in Figure 7, indicated as "stick") 32. The respective buttons 103 and the analog stick 32 outputs information regarding an operation performed to itself to the communication control section 101 repeatedly at appropriate timings.

The communication control section 101 acquires information regarding an input(s) (specifically, information regarding an operation or the detection results of the sensors) from respective input sections (specifically, the buttons 103, the analog stick 32 and the sensors 104 and 105). The communication control section 101 transmits operation data including the acquired information (or information obtained by performing predetermined processing on the acquired information) to the main body apparatus 2. In addition, the operation data is transmitted repeatedly, once every first predetermined time period. In addition, the interval that the information regarding an input(s) is transmitted from each of the input sections to the main body apparatus 2 may or may not be the same.

The above-described operation data is transmitted to the main body apparatus 2, whereby the main body apparatus 2 can obtain an input(s) provided to the left controller 3. That is, the main body apparatus 2 can determine operations on the buttons 103 and the analog stick 32 based on the operation data.

The left controller 3 comprises a power supply section 108. In the embodiment, the power supply section 108 has a battery and a power control circuit. Although not shown, the power control circuit is connected to the battery and also connected to components of the left controller 3 (specifically, components that receive power supplied from the battery).

As shown in Figure 7, the right controller 4 comprises a communication control section 111 that performs communication with the main body apparatus 2. Moreover, the right controller 4 comprises a memory 112 connected to the communication control section 111. The communication control section 111 is connected to components including the terminal 64. The communication control section 111 and the memory 112 have functions similar to those of the communication control section 101 and the memory 102, respectively, of the left controller 3. Therefore, the communication control section 111 can perform communication with the main body apparatus 2 through both wired communication via the terminal 64 and wireless communication not via the terminal 64 (specifically, communication in conformity with the Bluetooth (registered trademark) standard), and a method of communication to be performed with the main body apparatus 2 is controlled by the right controller 4.

The right controller 4 comprises input sections similar to the input sections of the left controller 3. Specifically, the right controller 4 comprises buttons 113 and the analog stick 52. These input sections have functions similar to those of the input sections of the left controller 3 and operate similarly to the input sections of the left controller 3.

The right controller 4 comprises a power supply section 118. The power supply section 118 has a function similar to the power supply section 108 of the left controller 3, and operates similarly to the power supply section 108.

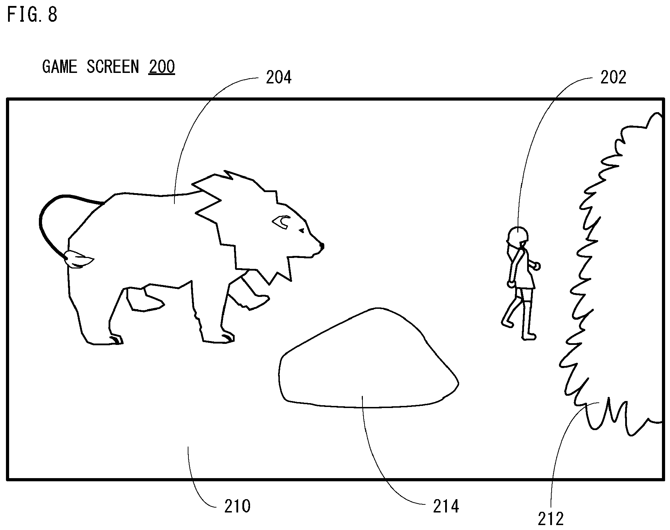

Next, with reference to Figure 8 - Figure 15, an outline of game processing of a virtual game and a silhouette display judgment that are executable in the game system 1 of this embodiment will be described. Figure 8 is a view showing a non-limiting example game image displayed on a display (e.g., the display 12) when executing an application of the virtual game of the embodiment.

The main body apparatus 2 functions also as an image processing apparatus, and generates and outputs (displays) display image data corresponding to various kinds of screens such as a game image. The processor 81 arranges various kinds of objects and characters in a three-dimensional virtual space, thereby to generate a certain sight or situation (scene). An image that this scene is shot by a virtual camera (viewed from a viewpoint) is displayed on the display 12 as the game image.

A game image shown in Figure 8 is a non-limiting example game screen 200. The game screen 200 includes a player character 202, a first fellow character (equivalent to "second object") 204 and a plurality of background objects (included in "first object") 210, 212 and 214. Moreover, an item(s) and/or a non-player character(s) may be included in the game screen 200. The item and/or the non-player character may also be included in the game screen 200 as the first object.

The player character 202 is an object or character whose an action or operation (hereinafter, simply referred to as "action") is controlled by a user or player (hereinafter, simply referred to as "player"). In the embodiment, the player character 202 is a main object imitating a human being. As the action of the player character 202, in a certain virtual place, i.e., a virtual space, moving, acquiring an item, using an item, stopping a movement of an enemy character, combining with a second fellow character (equivalent to "second object in a combined state") 206 that a first fellow character 204 is transformed, separating the second fellow character 206, talking with a non-player character, etc. correspond. Moreover, in the embodiment, the item includes various objects, such as tools (including arms and protector) that the player character 202 uses or possesses, shoes, gloves, hats or caps, medicine, treasure, coins (money), etc.

The first fellow character 204 is an object or character whose an action is controlled by the player. In the embodiment, the first fellow character 204 is an object imitating an animal, and is a fellow or partner object of the main object. As the action of the first fellow character 204, in the virtual space, moving, acquiring an item, attacking the enemy character, being transformed into the second fellow character 206 to be combined with the player character 202, returning to an original first fellow character 204 from the second fellow character 206 when being separated from the player character 202, etc. correspond.

Moreover, the non-player character is an object whose an action is controlled by a computer (processor 81 of Figure 6), not by the player. As an example, the non-player character includes an object imitating a human being except the player character 202. Alternatively, the non-player character is an object imitating an animal except first fellow character 204 and the second fellow character 206. As the action of the non-player character, in the virtual space, moving, attacking the player character 202 or the fellow character (204 or 206), talking with the player character 202, passing an item to the player character 202, etc. correspond.

The background objects (201, 212, 214, etc.) include objects constituting a background, such as figurines, vehicles, terrains, etc. that are arranged in the virtual space. The figurines include signboards, plaques, stone structures, stone monuments, pots, antiques, vases, paintings, hanging scrolls, etc. The vehicles include bicycles, motorcycles, automobiles, trains, horse-drawn carriages, trolleys, ships, airplanes, airships, balloons, etc. The terrains include ground (including roads, land, flower gardens, farmland, etc.), slopes, floors, trees, grass, flowers, buildings, stairs, bridges, water surfaces (including rivers, ponds, lakes, seas, etc.), holes, caves, cliffs, pillars, walls, fences, palings, etc. Although not corresponding to the vehicle and the terrain, clouds and blocks that are arranged in the air in the virtual space are also included in the background object.

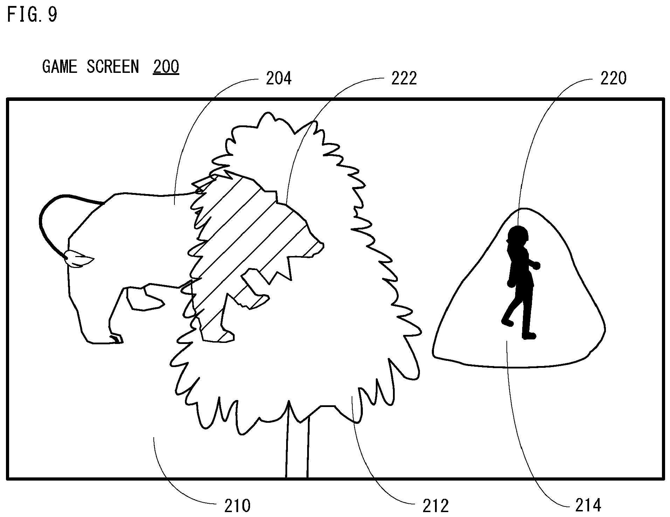

In an example shown in Figure 8 (the same in Figure 9, Figure 10 and Figure 13 - Figure 15), the background object 210 is a ground object, the background object 212 is a tree object, and the background object 214 is a rock object. Hereinafter, in this specification, in describing the background object, only a name of the figurines, the vehicles or the terrain will be described, and the word "object" will be omitted.

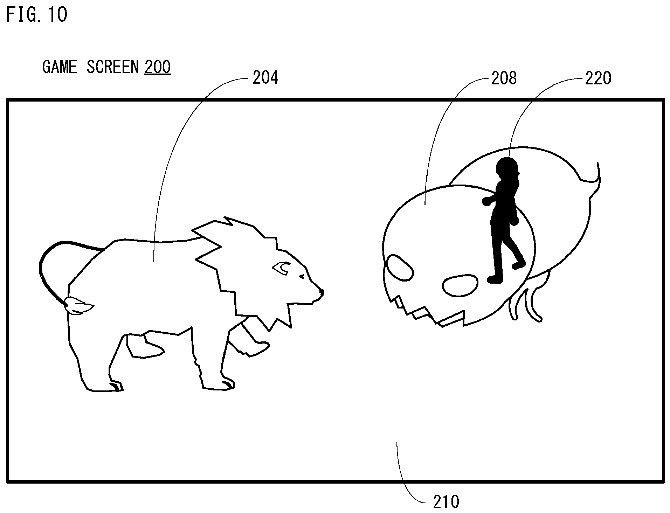

In the embodiment, the player moves the player character 202 and the fellow character (204 or 206) in the virtual space, thereby to advance a virtual game by defeating an enemy character 208 (see Figure 10), acquiring an item, using an item, solving tricks set in the virtual space, and so on. The virtual game is completed when defeating a boss (last) enemy character 208.

In a state that the player character 202 and the first fellow character 204 are separated from each other as shown in Figure 8 (hereinafter, referred to as a "separated state"), the player character 202 and the first fellow character 204 act separately.

Specifically, in the separated state, the player character 202 is moved in a direction that the analog stick 32 is tilted, and the first fellow character 204 is moved in a direction that the analog stick 52 is tilted. If the player character 202 and the first fellow character 204 approach or arrive at a position of an item that is placed in the virtual space, they acquire the item.

Moreover, if the ZL button 39 is operated when the enemy character 208 appears in the separated state, the player character 202 stops an action of the enemy character 208 by magic or electric shock. Moreover, if the R button 60 is operated, the player character 202 attacks the enemy character 208 by blowing fire, spitting water, and so on. When the ZR button 61 is operated, the first fellow character 204 attacks the enemy character 208 by biting the enemy character 208 or scratching the enemy character 208.

A game image shown in Figure 9 is another non-limiting example game screen 200. The game screen 200 shown in Figure 9 shows a state that the player character 202 and the first fellow character 204 are moved rightward in the game screen 200 shown in Figure 8.

In the game screen 200 shown in Figure 9, the player character 202 is located behind the rock background object 214, and the first fellow character 204 is located behind the tree background object 212. The player character 202 has its whole body hidden behind the rock background object 214, and in order to notify such a state to the player, a silhouette 220 of the whole body of the player character 202 is displayed on a surface (or in a front side) of the rock background object 214. The first fellow character 204 is partly hidden behind the tree background object 212, and in order to notify such a state to the player, a silhouette 222 of a part of the first fellow character 204 (in Figure 9, head and forelegs) is displayed on a surface (or in a front side) of the tree background object 212. In this embodiment, the silhouette 220 is orange, and the silhouette 222 is purple. That is, a color of the silhouette differs dependent on the character. In the drawing, however, the silhouette 220 is indicated filled in black and the silhouette 222 is indicated with slant lines. The colors of the silhouette 220 and the silhouette 222 are mere examples, and other colors may be sufficient as long as they are different from each other. Moreover, the colors of the silhouette 220 and the silhouette 222 may be changed according to colors of background objects (210, 212, 214, etc.), respectively. A silhouette 224 described later is a silhouette of the second fellow character 206, and the same as the silhouette 222 in color in this embodiment.

A game image shown in Figure 10 is a further non-limiting example game screen 200. The game screen 200 shown in Figure 10 shows a state that the enemy character 208 is arranged on the ground background obj ect 210 in addition to the player character 202 and the first fellow character 204. In the game screen 200 shown in Figure 10, the enemy character 208 is located in the right from a center of screen, the player character 202 is located behind the enemy character 208, and the first fellow character 204 is located in the left from the center of screen. The player character 202 has its whole body hidden behind the enemy character 208, and in order to notify such a state to the player, a silhouette 220 of the whole body of the player character 202 is displayed on a surface (or in a front side) of the enemy character 208.

In addition, although the game screen 200 shown in Figure 9 and Figure 10 shows a case where the player character 202 is hidden behind the rock background object 214 provided on the ground and behind the enemy character 208 arranged on the ground, and the silhouette 220 of the player character 202 is displayed, the player character 202 may be hidden behind the ground background object 210 or the water surface background object. For example, in a case where the player character 202 is located on a lower level of a level difference, when viewed from the virtual camera 250, a part or whole of the player character 202 may be hidden behind the ground background object 210 that is an upper level. Moreover, in a case where the player character 202 is located in underwater such as a river, when viewed from the virtual camera 250, a part or whole of the player character 202 may be hidden by the water surface background object. In such a case, the silhouette 220 is displayed on the ground background object 210 or the water surface background object. The same applies to the first fellow character 204 and the second fellow character 206.

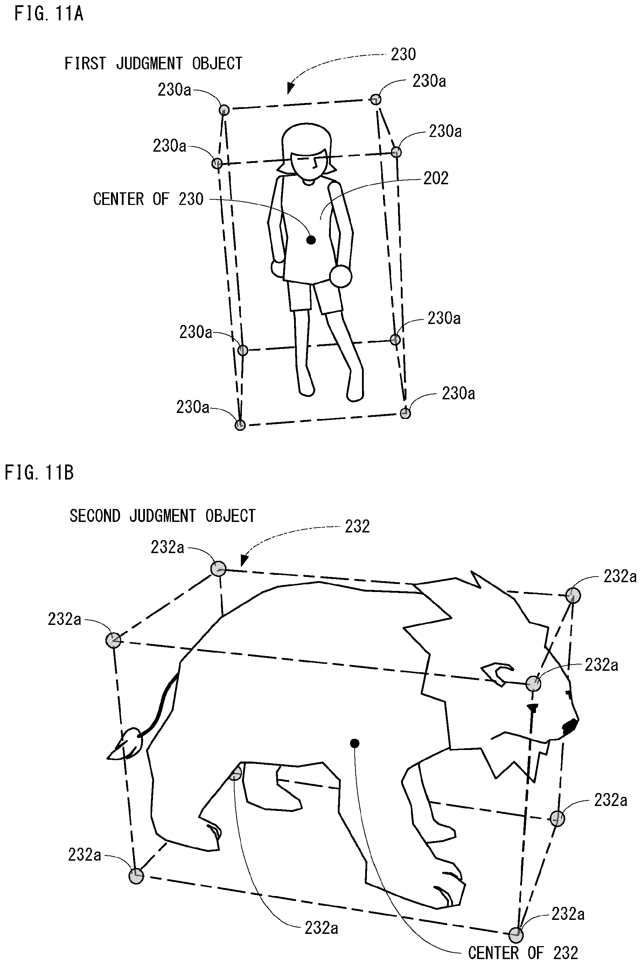

Here, a method of judging whether the silhouettes 220 and 222 are to be displayed (hereinafter, referred to as "silhouette display judgment") and a method of displaying the silhouettes 220 and 222 will be described. Figure 11A is a view showing the player character 202 arranged in the virtual space and a non-limiting example judgment object 230 (for convenience of description, referred to as "first judgment object") set to the player character 202. Figure 11B is a view showing the first fellow character 204 arranged in the virtual space and a non-limiting example judgment object 232 (for convenience of description, referred to as "second judgment object") set to the first fellow character 204.

The first judgment object 230 is an object for judging whether the silhouette 220 of the player character 202 is to be displayed. As shown in Figure 11A, the first judgment object 230 is a shape of a longwise rectangular parallelepiped or square cylinder, and arranged so as to surround the player character 202. In this embodiment, the first judgment object 230 is set to have a size that allows the whole of the player character 202 to fit thereinto. In Figure 11A, the first judgment object 230 is indicated by a dotted line, but is set not to be displayed in the game screen 200. In addition, it is possible not to actually display the first judgment object 230 in the game screen 200 by setting the first judgment object 230 colorless and transparent. That is, the first judgment object 230 is an invisible object for the player.

The first judgment object 230 is set to the player character 202, and is moved according to a movement of the player character 202. A center position of the first judgment object 230 is determined according to a position of one joint that is designated one out of a plurality of joints of the player character 202. However, a joint is a connection that articulates a plurality of bones constituting the player character 202. Moreover, the first judgment object 230 is a box-shaped object having a center position determined according to a position of the designated one joint of the player character 202 and a size capable of completely covering the player character 202 (hereinafter, referred to as "first predetermined size"). Directions of a length, width and height of a box may be determined with the coordinate axes of the local coordinate system that is set to the designated one joint of the player character 202, or may be determined with the coordinate axes of the world coordinate system. In the embodiment, a direction of the first judgment object 230 is set as a direction that one surface out of surfaces of the rectangular parallelepiped becomes vertical to a direction of the player character 202. For example, a direction that one surface out of two surfaces each having a largest area of the rectangular parallelepiped becomes vertical to the direction of the player character 202 is set. The direction of the player character 202 is a direction of a face at the time that the head (or neck) of the player character 202 is not moved or a direction of a front surface of the body.

However, the first judgment object 230 may be a box-shaped object centering on the position of the center of the player character 202. As an example, the position of the center of the player character 202 is a position moved to the height of the waist from the position of the player character 202 (e.g., position of foot).

Moreover, even if the direction (attitude) of the player character 202 is changed, it is not necessary to change the direction of the first judgment object 230. That is, the first judgment object 230 may be merely moved with the movement of the player character 202. At this time, a size and a position of the player character 202 or the first judgment object 230 are set so that the player character 202 can be fit into the first judgment object 230 even when the direction of the player character 202 is arbitrarily changed.

Moreover, the second judgment object 232 is an object for judging whether the silhouette 222 of the first fellow character 204 is to be displayed. As shown in Figure 11B, the second judgment object 232 is a shape of a longwise rectangular parallelepiped or square cylinder, and arranged so as to surround the first fellow character 204. In this embodiment, the second judgment object 232 is set as a size that most of first fellow character 204 is fit thereinto. As shown in Figure 11B, in this embodiment, a tip of nose, a part of head, a part of back, a tail and a part of hind legs of the first fellow character 204 are protruded from the second judgment object 232. A reason why the second judgment object 232 is set to such a size is that a whole body of the first fellow character 204 cannot be hidden behind the background objects (210, 212, 214, etc.) because the first fellow character 204 is large as compared with the player character 202, and to prevent that the silhouette 222 flickers according to being displayed or not being displayed when the first fellow character 204 is moved. In Figure 11B, the second judgment object 232 is indicated by a dotted line, but is set not to be displayed in the game screen 200. In addition, it is possible not to actually display the second judgment object 232 in the game screen 200 by setting the second judgment object 232 colorless and transparent. That is, the second judgment object 232 is an invisible object for the player.

The second judgment object 232 is set to the first fellow character 204, and is moved according to a movement of the first fellow character 204. The second judgment object 232 is a box-shaped object having a center position determined according to a position of the designated one joint of the first fellow character 204 and a size capable of just barely covering a body of the first fellow character 204 (hereinafter, referred to as "second predetermined size"). Directions of a length, width and height of a box may be determined with the coordinate axes of the local coordinate system that is set to the designated one joint of the first fellow character 204, or may be determined with the coordinate axes of the world coordinate system. In the embodiment, a direction of the second judgment object 232 is set as a direction that one surface out of surfaces of the rectangular parallelepiped becomes vertical to a direction of the first fellow character 204. For example, a direction that one surface out of two surfaces each having a largest area of the rectangular parallelepiped becomes vertical to the direction of the first fellow character 204 is set. A side surface of the first fellow character 204 is a surface that a direction thereof is parallel to the direction of the first fellow character 204, and is a vertical to a horizontal plane. The direction of the first fellow character 204 is a direction of a face at the time that the head (or neck) of the first fellow character 204 is not moved.

Thus, the size of the judgment object is suitably set according to the size of the character to which it is set. As for a comparatively small character such as the player character 202, since it is easy to be hidden with an obstacle, the size of the judgment object is set larger than the character. On the other hands, as for a comparatively large character such as the first fellow character 204, since it is difficult to be hidden with an obstacle, the size of the judgment object is set as a size capable of just barely covering the body of the character. That is, the size of the judgment object is not made to be larger unnecessarily.

However, even if the direction (attitude) of the first fellow character 204 is changed, it is not necessary to change the direction of the second judgment object 232. That is, the second judgment object 232 may be merely moved with the movement of the first fellow character 204. At this time, a size and a position of the first fellow character 204 or the second judgment object 232 are set so that the first fellow character 204 can be fit into the second judgment object 232 even when the direction of the first fellow character 204 is arbitrarily changed.

The first judgment object 230 and the second judgment object 232 have multiple judgment points, respectively. In this embodiment, the multiple judgment points are set to positions of the vertices of the rectangular parallelepiped. For convenience of description, the judgment points set to the first judgment object 230 will be referred to as the first judgment points 230a and the judgment points set to the second judgment object 232 will be referred to as the second judgment points 232a. As described above, since the first judgment object 230 is a box-shaped object having the center position determined based on the position of the designated one joint of the player character 202 and the first predetermined size, the multiple first judgment points 230a are set to the positions of eight (8) corners (i.e., vertices) of the first judgment object 230. Therefore, the multiple first judgment points 230a are moved according to the movement of the player character 202. Similarly, since the second judgment object 232 is a box-shaped object having the center position determined based on the position of the designated one j oint of the first fellow character 204 and the second predetermined size, the multiple second judgment points 232a are set to the positions of eight (8) corners (i.e., vertices) of the second judgment object 232. Therefore, the multiple second judgment points 232a are moved according to the movement of the first fellow character 204.

As described above, the first judgment object 230 is arranged so as to surround the player character 202, and this means a positional relationship that the player character 202 exists between two first judgment points 230a out of the multiple first judgment points 230a set to positions of two vertices in point symmetrical positions with respect to the center of the first judgment object 230 that is a rectangular parallelepiped. Similarly, the second judgment object 232 is arranged so as to surround the first fellow character 204, and this means a positional relationship that the first fellow character 204 exists between two second judgment points 232a out of the multiple second judgment points 232a set to positions of two vertices in point symmetrical positions with respect to the center of the second judgment object 232 that is a rectangular parallelepiped.

Each of the first judgment points 230a may be provided inside the first judgment object 230, and each of the second judgment points 232a may be provided inside the second judgment object 232. In this case, a part or all of respective first judgment points 230a may be set to a position or positions overlapping with the player character 202. Similarly, a part or all of respective second judgment points 232a may be set to a position or positions overlapping with the first fellow character 204.

Moreover, although each of the first judgment object 230 and the second judgment object 232 is made into a shape of a rectangular parallelepiped, instead of the rectangular parallelepiped, a shape simpler than the player character 202 such as a polyhedron, sphere, elliptical sphere or cylinder may be adopted. When the first judgment object 230 and the second judgment object 232 are made into other simple shapes, the first judgment points 230a and the second judgment points 232a are arranged suitably at multiple surface positions, respectively. Alternatively, the first judgment points 230a and the second judgment points 232a may be arranged inside the simple shapes, respectively. Also in this case, a part or all of the multiple first judgment points 230a may be set to a position or positions overlapping with the player character 202. Similarly, a part or all of the multiple second judgment points 232a may be set to a position or positions overlapping with the first fellow character 204.

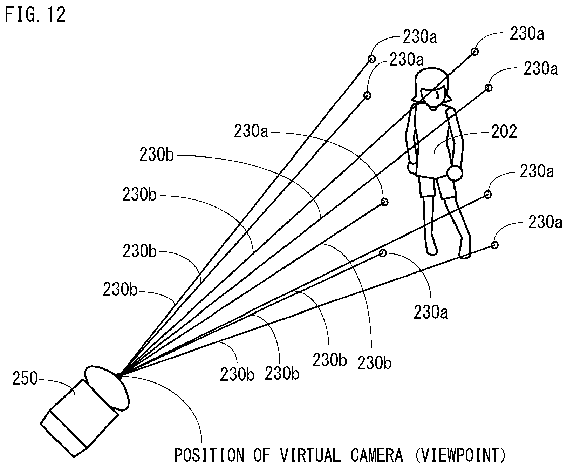

Figure 12 is a view showing a non-limiting example virtual space viewed from diagonally above behind the virtual camera 250. The silhouette display judgment of the player character 202 will be described using Figure 12. When judging whether the silhouette 220 of the player character 202 is to be displayed, it is judged (collision judgment) whether each of first line segment objects 230b (hereinafter, referred to as "first line segment object") connecting each of the first judgment points 230a and the position of the virtual camera 250 collides with (or hits to) one or more objects (hereinafter, referred to as "first object"). However, the player character 202 is not included in the first object. As shown also in Figure 12, in this embodiment, the number of the first judgment points 230a is eight (8), and the number of the first line segment objects 230b is eight (8). However, the first line segment object 230b is an invisible (i.e., colorless and transparent) for the player, and is not displayed in the game screen 200.

In addition, in Figure 12, only the eight (8) first judgment points 230a are shown, and a shape of the first judgment object 230 is omitted.

In the collision judgment, it is determined whether the first line segment objects 230b collide with one or more first objects when each of the first line segment object 230b is extended to each of the first judgment points 230a from the position of the virtual camera 250. In this embodiment, the first object is the above-described background objects (210, 212, 214, etc.) and the above-described enemy character 208. Although the examples of the game screen 200 shown in Figure 9 and Figure 10 show a case where the player character 202 is hidden behind a single first object, there may be a case where the player character 202 is hidden behind a plurality of first objects.

In the embodiment, in the collision judgment, each of the first line segment objects 230b is extended from the position of the virtual camera 250 that is an example of a position corresponding to the virtual camera 250; however, it does not need to be limited to this. The first line segment object 230b may be extended from the position that is slightly shifted in a shooting direction of the virtual camera 250 and/or a direction vertical to the shooting direction from the position of the virtual camera 250. Moreover, the first line segment object 230b may be extended from a position that passes the position of the virtual camera 250, and is on a plane intersecting perpendicularly to the shooting direction of the virtual camera 250, and makes a distance with each of the first judgment points 230a be shortest. That is, it may be allowed to perform the collision judgment using a line segment that connects each of the first judgment points 230a so as to intersect perpendicularly to a plane vertical to the direction of the virtual camera 250.

Moreover, in a case where the first line segment object 230b is set so as to pass through even if it is hit to something, it may be judged whether colliding with another first object before colliding with the first judgment point 230a.

Furthermore, in the embodiment, each of the first line segment objects 230b is extended from the position of the virtual camera 250; however, by moving a particle or sphere object (referred to as "moving object") toward each of the first judgment points 230a, and then, it may be judged whether the silhouette 220 of the player character 202 is to be displayed based on the number of the moving objects that collide or does not collide with the first object.

Based on a result of the collision judgment, it is judged whether the silhouette 220 of the player character 202 is to be displayed. In the embodiment, when it is judged that two or more first line segment objects 230b out of eight (8) first line segment objects 230b collide with one or more first objects, that is, when the number of collisions is two or more, it is determined, when viewed from the virtual camera 250, that at least a part of the player character 202 is hidden behind one or more first objects to some extent, and therefore, it is judged that the silhouette 220 of the player character 202 is to be displayed. Since the silhouette display judgment is performed to be displayed based on the number of the first line segment objects 230b that collide with one or more first objects (may be referred to as "number of collisions"), the judgment is simple.

If the determination is only whether the player character 202 is hidden behind the first object, there is no problem with the conventional method; however, the embodiment is characterized in that in a virtual game that displays a silhouette when the player character 202 is hidden to some extent, it is easier to judge whether it is hidden to some extent.

However, since it is only guessing whether the player character 202 is hidden behind the first object, even if displaying the silhouette is judged, in fact, it may not be hidden and the silhouette may not be displayed.

In this embodiment, it is judged that the silhouette 220 of the player character 202 is to be displayed when the number of collisions is two or more, but the number of collisions may be three (3) or more.

However, instead of the number of the first line segment objects 230b that collide with one or more first objects, it may be judged that the silhouette 220 of the player character 202 is to be displayed based on the number of the first line segment objects 230b that do not collide with one or more first object. Moreover, it may be judged whether the silhouette 220 of the player character 202 is to be displayed based on the number of the first judgment points 230a hidden behind one or more first objects when viewed from the virtual camera 250.

On the other hand, when one (1) first line segment object 230b out of eight (8) first line segment objects 230b collides with any first objects, or when it is judged that all the first line segment objects 230b do not collide with any first object, that is, when the number of collisions is one or less, it is determined that the player character 202 is hidden behind neither of the first object when viewed from the virtual camera 250, it is not judged that the silhouette 220 of the player character 202 is to be displayed.

In this embodiment, the first judgment object 230 having a size into which the player character 202 is fit is set, and the first judgment point 230a is set to each of eight (8) vertices of this first judgment object 230. A reason why it is judged that the silhouette 220 of the player character 202 is to be displayed in a case where two or more first line segment objects 230b collide with one or more first objects is because it has been verified by simulation or the like that in such a case the player character 202 is hidden behind one or more first objects to some extent or more when viewed from the virtual camera 250.

Therefore, the number of collisions for judging whether the silhouette 220 is to be displayed may be suitably changed when the size of the first judgment object 230 and the number of the first judgment points 230a are different from those of the embodiment. For example, in a case where all the first judgment points 230a are arranged inside the first judgment object 230, it may be judged that the silhouette 220 of the player character 202 is to be displayed when any one or more first line segment objects 230b collide with the first object, that is, when the number of collisions is one or more.

Although illustration and a detailed description are omitted, in the embodiment, a method of judging whether the silhouette 222 of the first fellow character 204 is to be displayed is the same as the method of judging whether the silhouette 220 of the player character 202 is to be displayed. Briefly describing, it is judged whether respective second line segment objects 232b connecting respective second judgment points 232a to the position of the virtual camera 250 collides with one or more first objects. Then, when the number of collisions is two or more, it is judged that the silhouette 222 of the first fellow character 204 is to be displayed. On the other hand, when the number of collisions is one or less, it is not judged that the silhouette 222 of the first fellow character 204 is to be displayed.

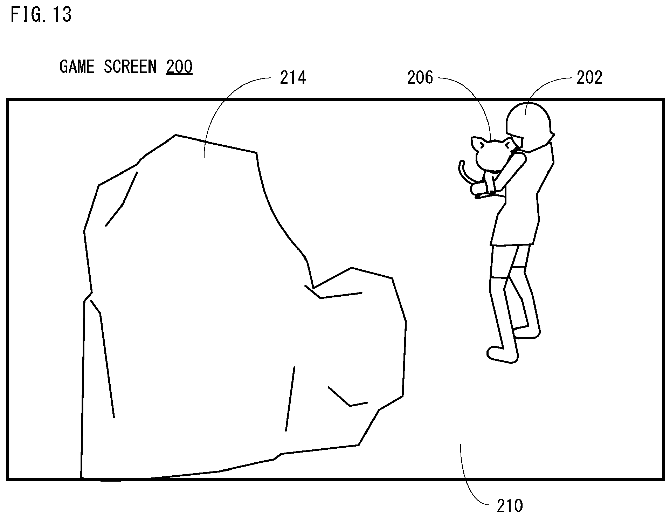

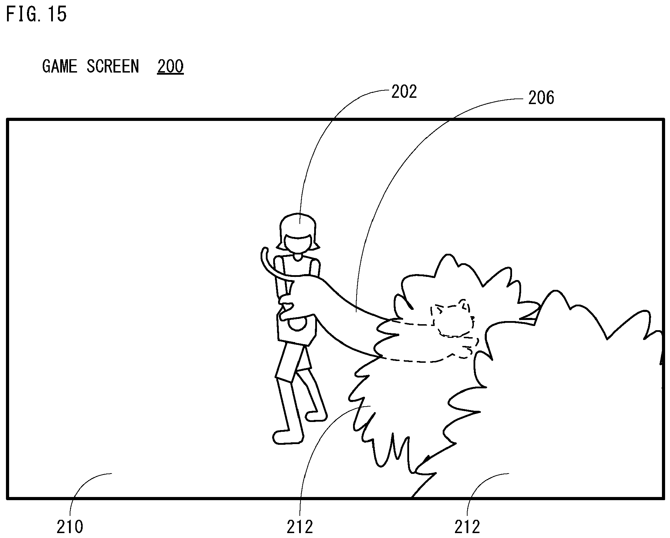

A game image shown in Figure 13 is a view showing another non-limiting example game screen 200. In Figure 13, the player character 202 is holding the second fellow character 206 imitating an animal in his/her arms. As described above, the second fellow character 206 is a character that the first fellow character 204 is transformed. The second fellow character 206 is also a character of a fellow of the player character 202. The second fellow character 206 is moved together with the player character 202, and elongated in a direction that the analog stick 52 is tilted (see Figure 15), and further, attacks the enemy character 208 and acquires an item when the ZR button 61 is operated. The second fellow character 206 bites the enemy character 208 and scratches the enemy character 208 to attack the enemy character 208.

However, the second fellow character 206 lengthens the body by a predetermined length in a direction that the analog stick 52 is tilted from a position that the second fellow character 206 was held by the player character 202 in his/her arms. That is, the second fellow character 206 is elongated in a direction that the analog stick 52 is tilted on the basis of the position of the player character 202. The second fellow character 206 may be elongated by the predetermined length in its neck or front legs instead of the body. Moreover, if a tilting operation of the analog stick 52 is stopped, that is, if the analog stick 52 is returned to a state of being not tilted, the body of the second fellow character 206 returns to its original length, and the second fellow character 206 becomes a state of being held by the player character 202 in his/her arms.

Thus, in a state that the player character 202 is combined or united with the second fellow character 206, the player character 202 and the second fellow character 206 are moved together by a tilting operation of one analog stick 32, and the second fellow character 206 is elongated on the basis of the position of the player character 202 by a tilting operation of the other analog stick 52, and if the tilting operation of the analog stick 52 is stopped, the second fellow character 206 returns to its original state.

Moreover, if the ZR button 61 is operated in a state that the second fellow character 206 is not lengthening the body, the second fellow character 206 attacks the enemy character 208 existing in a direction of the player character 202, or acquires an item existing in the direction of the player character 202.

In the embodiment, the player can play a virtual game by selecting, as a state of operating the player character 202 and the fellow character (204, 206) (hereinafter, referred to as "operation state"), a separated state that the player character 202 and the first fellow character 204 are individually moved or a state that the second fellow character 206 that is a character that the first fellow character 204 is transformed is moved together with the player character 202 while being combined or united with the player character 202 (hereinafter, referred to as "combined state").

As shown in Figure 13, in the combined state, the player character 202 overlaps or contacts with the second fellow character 206. Moreover, in the combined state, when the second fellow character 206 is elongated, the player character 202 holds the foot of the second fellow character 206. However, in the combined state, the second fellow character 206 may wrap around the neck, arms, or legs of the player character 202, or may ride on the back or the shoulder of the player character 202. Moreover, in the combined state, a part of the second fellow character 206 may be embedded into the player character 202 to be united therewith. Furthermore, in the combined state, the second fellow character 206 may be equipped as arms or protector in the hand of the player character 202.

As an example, at the starting time of the virtual game, the game screen 200 including the player character 202 and the second fellow character 206 that are in the combined state is displayed on the display 12. If the R button 60 is operated in the combined state, the operation state is changed from the combined state to the separated state. That is, the second fellow character 206 is separated from the player character 202, and the second fellow character 206 is transformed into the first fellow character 204. Moreover, if the L button 38 is operated in the separated state, the operation state is changed from the separated state to the combined state. However, the operation state may be changed to the combined state from the separated state on a condition that the player character 202 or the first fellow character 204 acquires a specific item, uses a specific item or arrives at a specific point, or on a condition that a specific event is occurring. That is, the first fellow character 204 is transformed into the second fellow character 206, and the second fellow character 206 being transformed is combined with the player character 202 (in this embodiment, held in arms of the player character 202). In also the combined state, when approaching or arriving at a position of an item placed in the virtual space, the player character 202 acquires the item. Moreover, also in the combined state, if the ZL button 39 is operated when the enemy character 208 appears, the player character 202 stops an action of the enemy character 208 with magic, electric shock or the like.

In this embodiment, in the combined state, it is judged whether the silhouette 220 of the player character 202 and the silhouette 224 of the second fellow character 206 are to be displayed according to a judgment result of the silhouette display judgment that judges whether the silhouette 220 of the player character 202 is to be displayed. However, it may be judged whether the silhouette 220 of the player character 202 is to be displayed according to a judgment result of the silhouette display judgment whether the silhouette 220 of the player character 202 is to be displayed, and it may be judged according to this judgment result whether the silhouette 224 of the second fellow character 206 is to be displayed. Therefore, even in the combined state, only the first judgment object 230 of the player character 202 is used, and a judgment object for the second fellow character 206 is not used or does not exist. That is, the multiple judgment points 230a for the silhouette display judgment of the player character 202 in the separated state and multiple judgment points (equivalent to "third judgment points") for the silhouette display judgment of the player character 202 and the second fellow character 206 in the combined state are the same.

Thus, in the combined state, as to the player character 202 and the second fellow character 206, it is possible to perform a silhouette display judgment at once using a set of judgment points. Moreover, in the combined state, it is possible to perform the silhouette display judgment for the player character 202 and the second fellow character 206 at once using the multiple first judgment points 230a in the separated state. That is, it is possible to suppress that processing from being complicated.

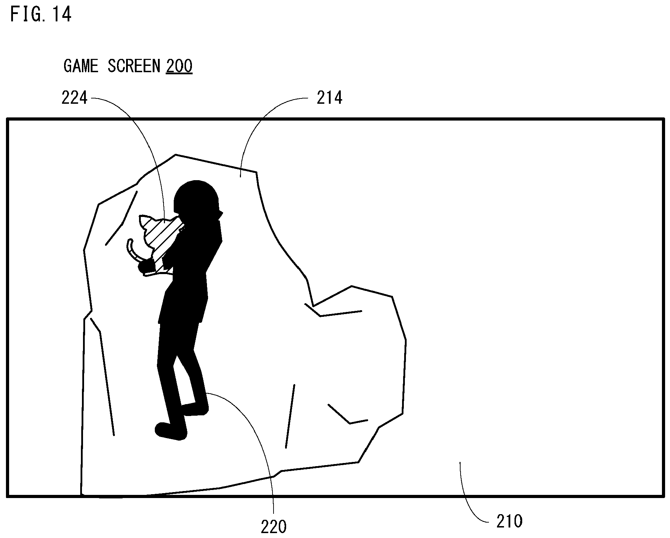

A game image shown in Figure 13 is a view showing another non-limiting example game screen 200. A game image shown in Figure 14 is a view showing still another non-limiting example game screen 200. A game image shown in Figure 15 is a view showing a further non-limiting example game screen 200.

As shown in Figure 13, the player character 202 and the second fellow character 206 are located in a right side of the rock background object 214, and are not hidden behind the rock background object 214.

In the game screen 200 shown in Figure 14, the player character 202 and the second fellow character 206 in the game screen 200 shown in Figure 13 are moved to the left, and the player character 202 and the second fellow character 206 are located behind the rock background object 214. That is, the player character 202 and the second fellow character 206 are hidden behind the rock background object 214 when viewed from the virtual camera 250, and in order to notify this to the player, the silhouette 220 of the whole body of the player character 202 and the silhouette 224 of the whole body of the second fellow character 206 are displayed on a surface (or front surface side) of the rock background object 214. That is, it is judged that the silhouette 220 of the player character 202 is to be displayed, and it is judged according to this judgment result that the silhouette 224 of the second fellow character 206 is also to be displayed, and in fact, the player character 202 and the second fellow character 206 are hidden behind the rock background object 214 when viewed from the virtual camera 250, and therefore, the silhouette 220 and the silhouette 224 are being displayed.

As described above, the silhouette 220 is orange and the silhouette 224 is purple. That is, the color of the silhouette 220 and the color of the silhouette 224 are different from each other. In the separated state, as to two (2) characters (202, 204) that the colors of the silhouettes are different from each other, it is judged, for each of the two characters, whether the silhouette display is needed by performing the collision judgment, whereas in the combined state, the collision judgment of the player character 202 includes judgment whether the silhouette display of the second fellow character 206 whose color of the silhouette differs is needed.

Moreover, in the combined state, when the two characters (202, 206) overlaps, the silhouette of the one on the front side is preferentially displayed. Therefore, as shown in Figure 13 and Figure 14, as for a portion of the second fellow character 206 hidden behind the player character 202, the silhouette 220 of the player character 202 is preferentially displayed; however, as for a portion of the second fellow character 206 not hidden by the player character 202 and a portion of the second fellow character 206 existing in the front side of the player character 202, the silhouette 224 of the second fellow character 206 is preferentially displayed.

The game screen 200 shown in Figure 15 shows a scene different from those in the game screen 200 shown in Figure 13 and Figure 14. In the game screen 200 shown in Figure 15, the tree background object 212 is shown in the lower right of a screen and the player character 202 is located in the center of the screen, and a part of the second fellow character 206 that the body is elongated from the position of the player character 202 located behind the tree background object 212. Although a part of second fellow character 206 is hidden behind the tree background object 212 when viewed from the virtual camera 250, the player character 202 is not hidden behind a background object.

Since the judgment object for the second fellow character 206 is not used or does not exist as described above, it is judged whether the silhouette 220 of the player character 202 is to be displayed, and according to this judgment result, it is judged whether the silhouette 224 of the second fellow character 206 is to be displayed. In the game screen 200 of Figure 15, the player character 202 is not hidden behind the first object, and it is not judged that the silhouette 220 of the player character 202 is to be displayed, and therefore, it is also not judged that the silhouette 224 of the second fellow character 206 is to be displayed.

In Figure 15, in order to indicate that a part of the second fellow character 206 is hidden behind the tree background object 212, a hidden portion is shown by a dotted line. In an actual game screen 200, the dotted line is not displayed, and a part of the body, a hip portion, a tail portion and a rear leg portion of the second fellow character 206 not hidden by the tree background object 212 are displayed.

Moreover, although a state that the second fellow character 206 is elongated from the position of the player character 202 is shown in Figure 15, in the state that the second fellow character 206 is held by the player character 202 in his/her arms as shown in Figure 13, even if only the second fellow character 206 is hidden behind the first object, as similar to a case shown in Figure 15, the silhouette 224 of the second fellow character 206 is not displayed.

However, as similar to the separated state, a judgment object for the second fellow character 206 may be also set, and a silhouette display judgment may be performed for each of the player character 202 and the second fellow character 206. In this case, in the game screen 200 shown in Figure 15, it is possible to display the silhouette 224 of the second fellow character 206 for a portion hidden behind the tree background object 212.

Although a detailed description is omitted, in either case of the separated state or the combined state, if the right button 33, the down direction button 34, the up direction button 35 or the left button 36 is operated, the item according to the operated button 33-36 may be used. If using the item, an effect according to the item may be activated. As an example, a part or all of a hit point (HP) value of the player character 202 is recovered, a part or all of a hit point (HP) value of the first fellow character 204 or the second fellow character 206 is recovered, an offensive force or the number of attack times of the first fellow character 204 or the second fellow character 206 is increased temporarily, or a defensive force of the player character 202, the first fellow character 204 or the second fellow character 206 is increased temporarily.

As a method of displaying the silhouettes 220, 222 and 224, a known method is employable. In this embodiment, a front-rear relationship between the character and an obstacle (e.g., background objects such as a tree) is judged by a Z test using a Z-buffer, and a portion of the character judged to be located behind the obstacle is drawn to be overwritten on the obstacle. Moreover, further known methods are also employable. As an example of the further known methods, outlines of two methods will be described.

A first method is a method using Z-buffer, and is disclosed in Japanese Patent Laying-open No. 2003-290550, for example. In a state that the player character 202 is hidden behind one or more first objects, data of texture for the silhouette 220 of the player character 202 is read, and the texture of the silhouette 220 is drawn on each pixel of a frame buffer corresponding to a shape of the player character 202 while ignoring a Z value of each pixel the one or more first objects drawn in the Z-buffer, that is, without updating the Z value of the pixel. In the processing of one of the methods, by thus ignoring (not updating) the Z value of each pixel, the image of the one or more first objects and the image of the silhouette 220 become a unified image, and the Z test is performed thereafter, in a case where the player character 202 is arranged in front of the one or more first objects when viewed from the virtual camera 250, the image is overwritten, and in a reverse case, the image is not overwritten. That is, since the original texture of the player character 202 is not overwritten when the player character 202 is hidden behind the one or more first objects, the image of the silhouette 220 remains. On the other hand, when the player character 202 is arranged in front of the one or more first objects, the original texture of the player character 202 is overwritten. Thus, when a part of the player character 202 is not hidden behind the one or more first objects, a portion not hidden behind the one or more first objects is displayed with the original texture of the player character 202, and the silhouette 220 for a remaining portion of the player character 202 hidden behind the one or more first objects is displayed.

A second method is a method using a stencil buffer. As an example, "1" is first written in the stencil buffer of a drawing area of one or more first objects. Next, "2" is written in the area that "1" has been written in the stencil buffer in the drawing areas of the player character 202. Then, "3" is written in the stencil buffer of the area that the player character 202 is not hidden behind the one or more first objects in the area that "2" has been written. Finally, all or a part of the silhouettes 220 of the player characters 202 that is hidden behind the one or more first objects is displayed by filling the area that "2" is written with a silhouette color (e.g., black).

Thus, in the known method, the front-rear relationship between the player character 202 and the one or more first objects is judged, and the silhouette 220 corresponding to a portion of the player character 202 judged to be rear side (depth side) of the one or more first objects is displayed. On the other hand, in the judgment whether the silhouette 220 is to be displayed in this embodiment, the collision judgment is used, in which it is determined whether the first line segment object 230b collides with the one or more first objects. Thus, it is possible to perform the judgment on whether the silhouette 220 is to be displayed and determination of a shape of the silhouette 220 to be displayed with suitable means, respectively. Specifically, in the embodiment, the judgment of the front-rear relationship between the player character 202 and the first objects is not used for the judgment on whether the silhouette is to be displayed, and, the collision judgment of the first line segment objects 230b and the first objects is not used for the determination of the shape of the silhouette 220 to be displayed.

Although in the above-described first method and in the above-described second method, a case where the silhouette 220 of the player character 202 is displayed, the same applies to a case where the silhouettes 222 and 224 of the first fellow character 204 and the second fellow character 206 are to be displayed.

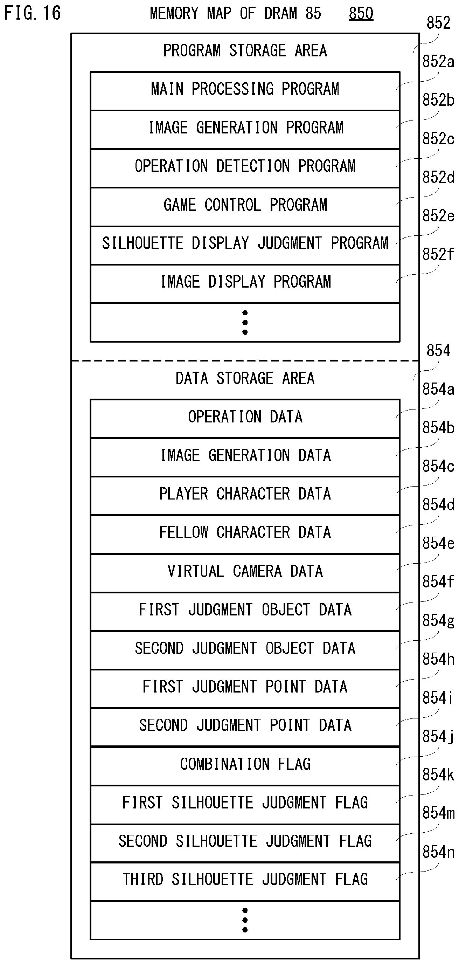

Figure 16 is a view showing a non-limiting example memory map 850 of the DRAM 85 shown in Figure 6. As shown in Figure 16, the DRAM 85 includes a program storage area 852 and a data storage area 854. The program storage area 852 is stored with a program of game application (i.e., game program). As shown in Figure 16, the game program includes a main processing program 852a, an image generation program 852b, an operation detection program 852c, a game control program 852d, a silhouette display judgment program 852e, an image display program 852f, etc. However, a function of displaying images such as a game image is a function that the main body apparatus 2 is provided with. Therefore, the image display program 852f is not included in the game program.

Although a detailed description is omitted, at a proper timing after a power of the main body apparatus 2 is turned on, a part or all of each of the programs 852a-852f is read from the flash memory 84 and/or a storage medium attached to the slot 23 to be stored in the DRAM 85. However, a part or all of each of the programs 852a-852f may be acquired from other computers capable of performing communication with the main body apparatus 2.

The main processing program 852a is a program for executing overall game processing (hereinafter, referred to as "overall processing") of a virtual game of the embodiment.

The image generation program 852b is a program for generating, using image generation data 854b described later, display image data corresponding to various kinds of images such as a game image. The game image includes the player character 202, the fellow characters (204 and 206), the first objects, the judgment objects (230 and 232), etc., and may include the enemy character 208 and the silhouettes 220, 222, and 224. However, the first judgment object 230 and the second judgment object 232 are both colorless and transparent objects, and when the second fellow character 206 is included in the game image, the second judgment object 232 is not included in the game image.

The operation detection program 852c is a program for acquiring the operation data 854a from the left controller 3 and/or the right controller 4. Moreover, when one or more further controllers are used, the operation detection program 852c also acquires the operation data 854a from the one or more further controllers.

The game control program 852d is a program for executing game control processing of the virtual game. The game control processing includes processing that makes the player character 202 perform an arbitrary action according to an operation of the player, and processing that makes the non-player character perform an arbitrary action without regarding to an operation of the player. However, in the game control processing, there is a case of changing the position and the direction of the player character 202 according to an advance of the virtual game regardless of an operation of the player.

The silhouette display judgment program 852e is a program that judges whether the first line segment objects 230b each connecting each of the first judgment points 230a to the position of the virtual camera 250 collides with one or more first objects, and judges whether the second line segment objects 232b each connecting each of the second judgment points 232a to the position of the virtual camera 250 collides with one or more first object, and based on a judgment result of each collision judgment, judges whether each of the silhouette 220 of the player character 202 and the silhouette 222 of the first fellow character 204 is to be displayed.

The image display program 852f is a program for outputting to a display the display image data generated according to the image generation program 852b. Therefore, display images corresponding to the display image data (game screen 200, etc.) are displayed on the display such as the display 12.

In addition, the program storage area 852 is further stored with a sound output program for outputting a sound such as a BGM, a communication program for performing communication with other apparatuses, a backup program for storing data in a nonvolatile storage medium such as the flash memory 84, etc.

Moreover, the data storage area 854 is stored with the operation data 854a, the image generation data 854b, player character data 854c, fellow character data 854d, virtual camera data 854e, first judgment object data 854f, second judgment object data 854g, first judgment point data 854h, second judgment point data 854i, etc. Moreover, a combination flag 854j, a first silhouette judgment flag 854k, a second silhouette judgment flag 854m, a third silhouette judgment flag 854n are provided in the data storage area 854.

The operation data 854a is operation data received from the left controller 3 and/or the right controller 4. In the embodiment, when the main body apparatus 2 receives the operation data from both of the left controller 3 and the right controller 4, the main body apparatus 2 stores the operation data 854a while making the left controller 3 and the right controller 4 be identifiable. Moreover, when one or more further controllers are used, the main body apparatus 2 stores the operation data 854a while making the one or more further controllers identifiable.

The image generation data 854d is data required for generating the display image data, such as polygon data and texture data.

The player character data 854c includes current position data, direction data and item data of the player character 202. The current position data includes data of a current position of the player character 202 in the virtual space, i.e., data of the three-dimensional coordinates. The direction data includes data of a current direction of the player character 202 in the virtual space. The item data includes a kind of item and data of the number of items that the player character 202 possesses.

The fellow character data 854d includes current position data, direction data and an elongation flag of the first fellow character 204 or the second fellow character 206. The current position data includes data of current positions of the first fellow character 204 or the second fellow character 206 in the virtual space, i.e., data of the three-dimensional coordinates. The direction data includes data of current direction of the first fellow character 204 or the second fellow character 206 in the virtual space. The elongation flag is a flag that indicates whether the second fellow character 206 is elongated. When the second fellow character 206 is elongated, the elongation flag is turned on, and the elongation flag is turned off when the second fellow character 206 is not elongated.

The virtual camera data 854e includes current position data and direction data of the virtual camera 250. The current position data includes data of a current position of the virtual camera 250 in the virtual space, i.e., data of the three-dimensional coordinates. The direction data includes data of a current direction of the virtual camera 250 in the virtual space.

The first judgment object data 854f includes center position data and size data of the first judgment object 230 that is set to the player character 202. The center position data is data of the center of the first judgment object 230 of a rectangular parallelepiped that is determined based on a position of the designated one joint of the player character 202 in the virtual space, i.e., data of the thee-dimensional coordinates. The size data is data of a size, i.e., length, width and height of the first judgment object 230 of a rectangular parallelepiped.

The second judgment object data 854g includes center position data and size data of the second judgment object 232 that is set to the first fellow character 204. The center position data is data of the center of the second judgment object 232 of a rectangular parallelepiped that is determined based on a position of the designated one joint of the first fellow character 204 in the virtual space, i.e., data of the thee-dimensional coordinates. The size data is data of a size, i.e., length, width and height of the second judgment object 232 of a rectangular parallelepiped.

In addition, the second judgment object data 854g is not stored in the data storage area 854 when the first fellow character 204 is not arranged in the virtual space.

The first judgment point data 854h is position data for each of the multiple first judgment points 230a, i.e., data of the three-dimensional coordinates. In this embodiment, the first judgment point data 854h is data of positions of the vertices of the first judgment object 230 of a rectangular parallelepiped determined based on the first judgment object data 854f.

The second judgment point data 854i is position data for each of the multiple second judgment points 232a, i.e., data of three-dimensional coordinates. In this embodiment, the second judgment point data 854i is data of positions of the vertices of the second judgment object 232 of a rectangular parallelepiped determined based on the second judgment object data 854g.

The combination flag 854j is a flag that indicates whether the player character 202 and the fellow character are in the combined state. When the player character 202 and the fellow character (in the embodiment, the second fellow character 206) are in the combined state, the combination flag 854j is turned on. On the other hand, when the player character 202 and the fellow character (in the embodiment, the first fellow character 204) are in the separated state, the combination flag 854j is turned off.

The first silhouette judgment flag 854k is a flag that indicates whether the silhouette 220 of the player character 202 is to be displayed. When it is judged that the silhouette 220 of the player character 202 is to be displayed, the first silhouette judgment flag 854k is turned on. On the other hand, when it is judged that the silhouette 220 of the player character 202 is not to be displayed, the first silhouette judgment flag 854k is turned off.

The second silhouette judgment flag 854m is a flag that indicates whether the silhouette 222 of the first fellow character 204 is to be displayed. When it is judged that the silhouette 222 of the first fellow character 204 is to be displayed, the second silhouette judging flag 854m is turned on. On the other hand, when it is judged that the silhouette 222 of the first fellow character 204 is not to be displayed, the second silhouette judging flag 854m is turned off. However, in the combined state, the first fellow character 204 is not arranged in the virtual space and thus the silhouette display judgment of the first fellow character 204 is not performed, and therefore, the second silhouette judgment flag 854m is turned off.

The third silhouette judgment flag 854n is a flag that indicates whether the silhouette 220 of the player character 202 and the silhouette 224 of the second fellow character 206 are to be displayed. When it is judged that the silhouette 220 of the player character 202 and the silhouette 224 of the second fellow character 206 are to be displayed, the third silhouette judgment flag 854n is turned on. On the other hand, when it is judged that the silhouette 220 of the player character 202 and the silhouette 224 of the second fellow character 206 are not to be displayed, the third silhouette judgment flag 854n is turned off. However, in the separated state, the second fellow character 206 is not arranged in the virtual space, and therefore, the third silhouette judgment flag 854n is turned off.

Although illustration is omitted, the data storage area 854 is stored with other data such as data of the non-player character(s) and the background object(s) that are arranged in the virtual space, and is provided with other flag(s) and a timer(s) (or counter(s)).

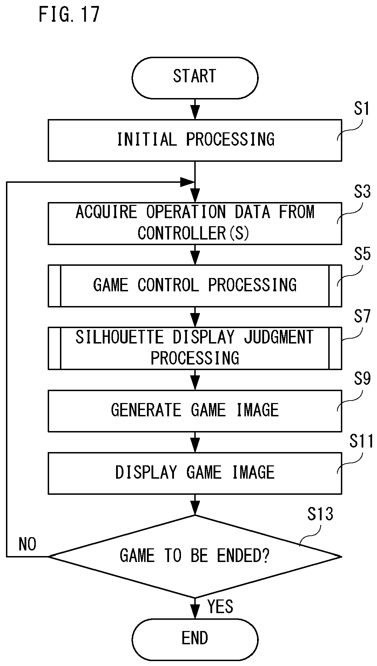

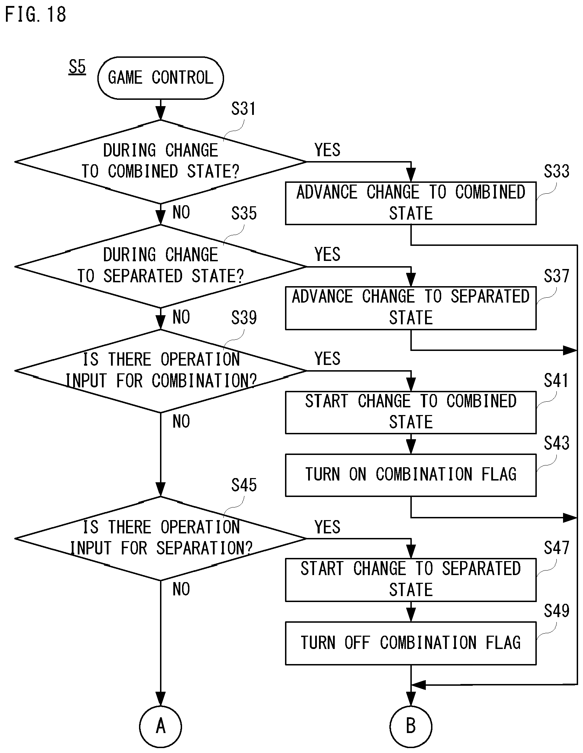

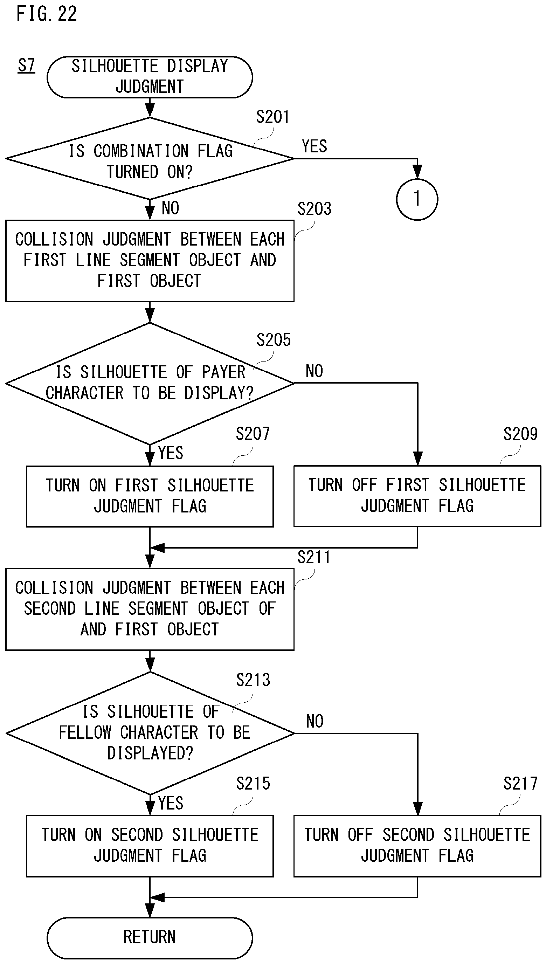

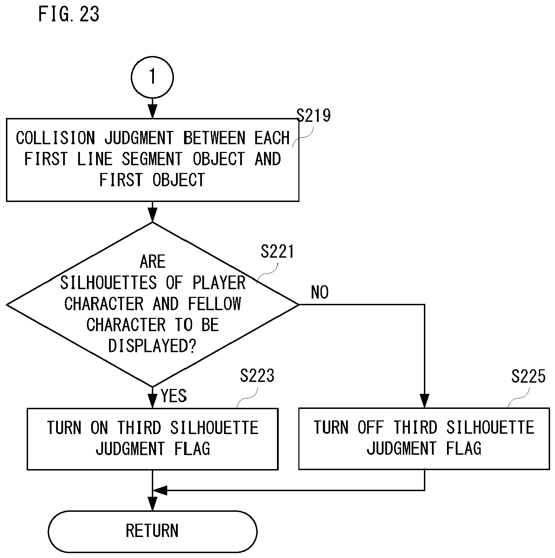

Figure 17 is a flowchart showing non-limiting example processing (overall processing) of the game program by the processor 81 (or computer) of the main body apparatus 2. Figure 18 - Figure 21 are flowcharts showing non-limiting example game control processing of the processor 81 of the main body apparatus 2. Figure 22 and Figure 23 are flowcharts showing non-limiting example silhouette display judgment processing of the processor 81 of the main body apparatus 2. In the following, the overall processing, the game control processing and the silhouette display judgment processing will be described using Figure 17 - Figure 23.

However, processing of respective steps of the flowcharts shown in Figure 17 - Figure 23 are mere examples, and if the same or similar result is obtainable, an order of the respective steps may be exchanged. Moreover, in the embodiment, it will be described that the processing of the respective steps of the flowcharts shown in Figure 17 - Figure 23 are basically executed by the processor 81; however, some steps may be executed by a processor(s) and/or a dedicated circuit(s) other than the processor 81.

When the power of the main body apparatus 2 is turned on, prior to execution of the overall processing, the processor 81 executes a boot program stored in a boot ROM not shown, whereby respective units including the DRAM 85, etc. are initialized. When the execution of the game program of the embodiment is instructed by the player, the main body apparatus 2 will start the overall processing.

As shown in Figure 17, if the overall processing is started, the processor 81 executes initial setting in a step S1. Here, the processor 81 determines positions and directions that the player character 202, the fellow character (in this embodiment, second fellow character 206), the non-player character and the background object (210, 212, 214, etc.) and the virtual camera 250 are to be arranged as initial positions and initial directions in the virtual space. However, in starting the game from where the player left off, the positions and the directions that the player character 202, the fellow character (first fellow character 204 or second fellow character 206), the non-player character and the background object (210, 212, 214, etc.) and the virtual camera 250 are to be arranged are determined as the positions and the directions at the time of being saved. Therefore, the player character data 854c in which the initial position and the initial direction or the position and the direction at the time of being saved of the player character 202 are set as the current position data and the current direction data is stored in the data storage area 854. Moreover, the fellow character data 854d in which the initial position and the initial direction or the position and the direction at the time of being saved of the fellow character (first fellow character 204 or second fellow character 206) are set as the current position data and the current direction data is stored in the data storage area 854. Furthermore, the virtual camera data 854e in which the initial position and the initial direction or the position and the direction at the time of being saved are set as the current position data and the current direction data is stored in the data storage area 854.

Moreover, although the combination flag 854j is turned on at the time of the start of the overall processing, when starting the game from where the player left off, the combination flag 854j is turned on or turned off according to the state at the time of being saved. Furthermore, the first silhouette judgment flag 854k, the second silhouette judgment flag 854m and the third silhouette judgment flag 854n are turned off at the time of the start of the overall processing.

In a subsequent step S3, the operation data transmitted from the left controller 3 and/or the right controller 4 is acquired, and in a step S5, the game control processing described later is executed (see Figure 18 - Figure 21). In a next step S7, silhouette display judgment processing described later (see Figure 22 and Figure 23) is executed.

Subsequently, in a step S9, the game image (i.e., display image) is generated. Here, the processor 81 generates a certain situation or scene by arranging in the three-dimensional virtual space various kinds of objects and characters based on a result of the game control processing in the step S5 to generate the game image data corresponding to the game image (game screen 200, etc.) that the generated scene is shot by the virtual camera 250. At this time, when the first silhouette judgment flag 854k is turned on, the game image including the silhouette 220 of the player character 202 is generated. Moreover, in the separated state that the player character 202 and the first fellow character 204 are not combined with each other, when the second silhouette judgment flag 854m is turned on, the silhouette 222 of the first fellow character 204 is also included in the game image. Moreover, in the combined state that the player character 202 and the second fellow character 206 are combined with each other, when the third silhouette judgment flag 854n is turned on, the silhouette 220 of the player character 202 and the silhouette 224 of the second fellow character 206 are also included in the game image. However, as described above, the front-rear relationship between the characters and the obstacle is determined by the Z test using the Z buffer, and a portion of the character determined to be located behind the obstacle will be drawn to be overwritten the obstacle, and therefore, the silhouettes 220, 222 and 224 are displayed only when the player character 202, the first fellow character 204 and the second fellow character 206 are hidden behind one or more first objects.

In a next step S11, the game image is displayed. Here, the processor 81 outputs the game image data generated in the step S9 to the display 12.

Then, in a step S13, it is determined whether the game is to be ended. The determination in the step S13 is performed based on whether the player issues an instruction to end the game. If "NO" is determined in the step S13, that is, if the game is not to be ended, the process returns to the step S3. On the other hand, if "YES" is determined in the step S13, that is, if the game is to be ended, the overall game processing is terminated.

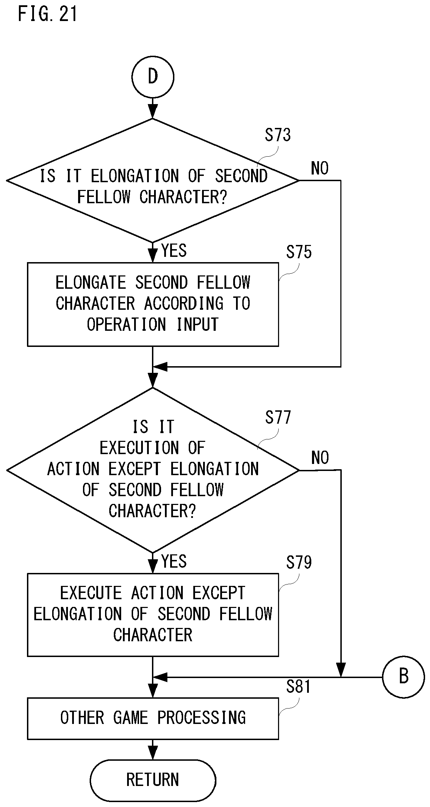

As shown in Figure 18, if the game control processing shown in the step S5 is started, the processor 81 determines, in a step S31, whether the operation state is during a change from the separated state to the combined state. If "YES" is determined in the step S31, that is, if the operation state is during a change from the separated state to the combined state, a change to the combined state is advanced in a step S33, and the process proceeds to a step S81 shown in Figure 21. In the step S33, the first fellow character 204 is transformed into the second fellow character 206, and the second fellow character 206 is held by the player character 202 in his/her arms.

If "NO" is determined in the step S31, that is, if an operation state is not during a change from the separated state to the combined state, it is determined, in a step S35, whether the operation state is during a change from the combined state to the separated state. If "YES" is determined in the step S35, that is, if the operation state is during a changed from the combined state to the separated state, the change to the separated state is advanced in a step S37, and the process proceeds to the step S81. In the step S37, the second fellow character 206 is separated from the player character 202, and the second fellow character 206 is transformed into the first fellow character 204.

If "NO" is determined in the step S35, that is, if the operation state is not during a change from the combined state to the separated state, it is determined, in a step S39, whether there is any operation input for combination. Here, the processor 81 determines whether the operation data acquired in the step S3 includes operation data indicating an operation of the L button 38. If "YES" is determined in the step S39, that is, if there is an operation input for combination, a change to the combined state from the separated state is started in a step S41, and the combination flag 854j is turned on in a step S43, and then, the process proceeds to the step S81.

If "NO" is determined in the step S39, that is, if there is no operation input for combination, it is determined, in a step S45, whether there is any operation input for separation. Here, the processor 81 determines whether the operation data acquired in the step S3 includes operation data indicating an operation of the R button 60. If "YES" is determined in the step S45, that is, if there is an operation input for separation, a change to the separated state from the combined state is started in a step S47, and the combination flag 854j is turned off in a step S49, and then, the process proceeds to the step S81.

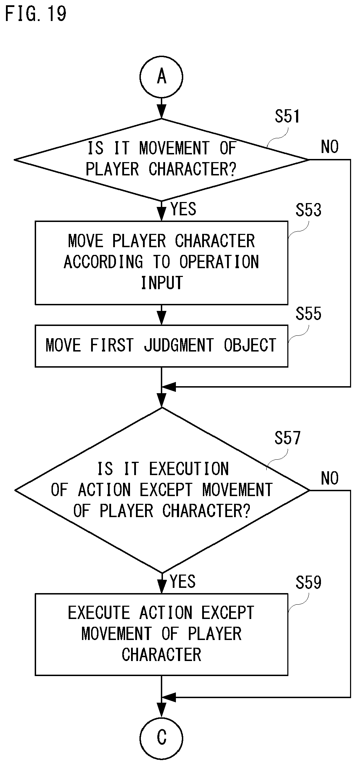

If "NO" is determined in the step S45, that is, if there is no operation input for separation, it is determined, in a step S51 shown in Figure 19, whether it is a movement of the player character 202. Here, the processor 81 determines whether the operation data acquired in the step S3 includes operation data indicating an operation of the analog stick 32. If "YES" is determined in the step S51, that is, if it is a movement of the player character 202, the player character 202 is moved according to an operation input in a step S53. In this step S53, the processor 81 changes the position and the direction of the player character 202 to a direction according to an operation of the analog stick 32. That is, the current position data and the current direction data of the player character 202 are updated. Although illustration is omitted, when the second fellow character 206 is being combined with the player character 202, the current position and the current direction of the second fellow character 206 are changed according to the current position and the current direction of the player character 202. That is, the current position data and the current direction data that are included in the fellow character data 854d are updated. Moreover, although illustration is omitted, the player character 202 acquires an item when approaching or arriving at a position of the item. When the player character 202 acquires an item, the item data of the player character data 854c is updated. That is, the number of the acquired items is increased.

In a next step S55, the first judgment object 230 is moved according to the movement of the player character 202, and the process proceeds to a step S57. In the step S55, the processor 81 updates the center position data included in the first judgment object data 854f so that the first judgment object 230 is moved in parallel with the movement of the player character 202. At this time, the processor 81 updates the first judgment point data 854h. That is, the position data of the multiple first judgment points 230a is updated to data of the vertices positions of the first judgment object 230 of a rectangular parallelepiped determined based on the updated first judgment object data 854f.

Moreover, if "NO" is determined in the step S51, that is, if it is not a movement of the player character 202, it is determined, in the step S57, whether it is an execution of an action except movement of the player character 202. Here, the processor 81 determines whether the operation data acquired in the step S3 includes operation data indicating either operation of the ZL button 39 and the buttons 33-36.

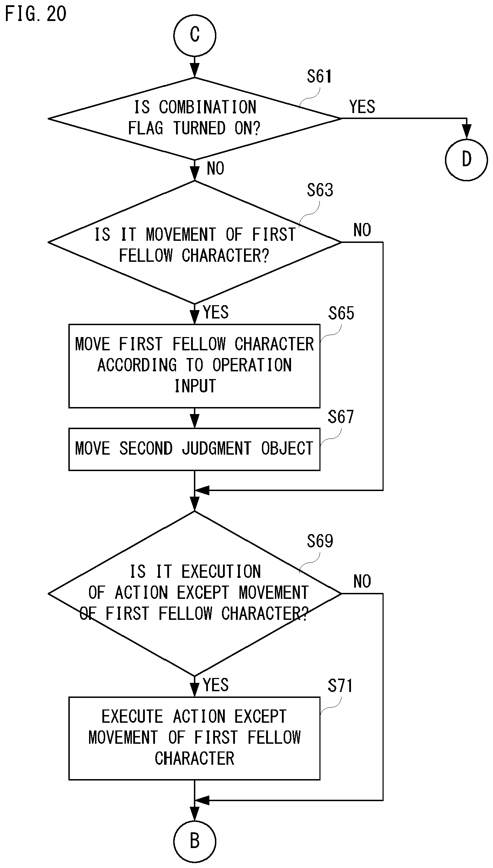

If "YES" is determined in the step S57, that is, if it is an execution of an action except movement of the player character 202, in a step S59, the player character 202 is made to execute an action except movement according to an operation of the player, and the process proceeds to a step S61 shown in Figure 20. However, if the player character 202 is executing an action except movement, the execution of the action except movement is continued. As the action except movement of the player character 202, the attack to the enemy character 208, the use of the item, etc. correspond. When the player character 202 uses the item, the item data of the player character data 854c is updated. That is, the number of the used items is decreased. On the other hand, if "NO" is determined in the step S57, that is, if it is not an execution of an action except movement of the player character 202, the process proceeds to the step S61.

In the step S61, it is determined whether the combination flag 854j is turned on. If "YES" is determined in the step S61, that is, if the combination flag 854j is turned on, the process proceeds to a step S73 shown in Figure 21. On the other hand, if "NO" is determined in the step S61, that is, if the combination flag 854j is turned off, it is determined, in a step S63, whether it is a movement of the first fellow character 204. Here, the processor 81 determines whether the operation data acquired in the step S3 includes operation data indicating an operation of the analog stick 52.

If "YES" is determined in the step S63, that is, if it is a movement of the first fellow character 204, the first fellow character 204 is moved according to an operation input in a step S65. In this step S65, the processor 81 changes the position and the direction of the first fellow character 204 to a direction according to an operation of the analog stick 52. That is, the current position data and the current direction data that are included in the fellow character data 854d are updated. Although illustration is omitted, the first fellow character 204 acquires an item when approaching or arriving at a position of the item. When the first fellow character 202 acquires an item, the item data of the player character data 854c is updated. That is, the number of the acquired items is increased.

In a next step S67, the second judgment object 232 is moved according to a movement of the first fellow character 204, and the process proceeds to a step S69. In the step S67, the processor 81 updates the center position data included in the second judgment object data 854g so that the second judgment object 232 is moved in parallel with the movement of the first fellow character 204. At this time, the processor 81 updates the second judgment point data 854i. That is, the position data of the multiple second judgment points 232a is updated to data of the vertices positions of the second judgment object 232 of a rectangular parallelepiped determined based on the updated second judgment object data 854g.

Moreover, if "NO" is determined in the step S63, that is, if it is not a movement of the first fellow character 204, it is determined, in a step S69, whether it is an execution of an action except movement of the first fellow character 204. Here, the processor 81 determines whether the operation data acquired in the step S3 includes the operation data indicating an operation of the ZR button 61.

If "NO" is determined in the step S69, that is, if it is not an execution of an action except movement of the first fellow character 204, the process proceeds to the step S81. On the other hand, if "YES" is determined in the step S69, that is, if it is an execution of an action except movement of the first fellow character 204, in a step S71, the first fellow character 204 is made to execute an action except movement, and the process proceeds to the step S81. However, if the first fellow character 204 is executing an action except movement, the execution of the action except movement is continued. As the action except movement of the first fellow character 204, the attack to the enemy character 208, etc. correspond.

As shown in Figure 21, in the step S73, it is determined whether it is an elongation of the second fellow character 206. Here, the processor 81 determines whether the operation data acquired in the step S3 includes operation data indicating an operation of the analog stick 52.

If "YES" is determined in the step S73, that is, if it is an elongation of the second fellow character 206, in a step S75, the second fellow character 206 is made to be elongated according to an operation input, and the process proceeds to a step S77. In the step S75, the processor 81 elongates the body of the second fellow character 206 in a direction according to an operation of the analog stick 52 by a predetermined length. That is, the direction data included in the fellow character data 854d is updated, and the elongation flag is turned on.

If "NO" is determined in the step S73, that is, if it is not an elongation of the second fellow character 206, it is determined, in the step S77, whether an action except elongation of the second fellow character 206 is to be executed. Here, the processor 81 determines whether the operation data acquired in the step S3 includes operation data indicating an operation of the ZR button 61. However, when the second fellow character 206 is being elongated, that is, if the elongation flag included in the fellow character data 854d is turned on, if "NO" is determined in the step S73, the second fellow character 206 is returned to its original length. That is, the elongation flag included in the fellow character data 854d is turned off.

If "NO" is determined in the step S77, that is, if it is not an execution of an action except elongation of the second fellow character 206, the process proceeds to the step S81. On the other hand, if "YES" is determined in the step S77, that is, if it is an execution of an action except elongation of the second fellow character 206, the second fellow character 206 is made to execute the action except elongation in a stepS79, and the process proceeds to the step S81. However, if the second fellow character 206 is executing the action except elongation, the execution of the action except elongation is continued. As the action except elongation of the second fellow character 206, the attack to the enemy character 208, the acquisition of the item, etc. correspond. However, when the second fellow character 206 is not elongated, the second fellow character 206 attacks the enemy character 208 existing in the direction of the player character 202, or acquires the item existing in the direction of the player character 202. When the second fellow character 206 acquires an item, the item data of the player character data 854c is updated. That is, the number of the acquired items is increased.

In the step S81, other game processing is executed, and the game control processing is ended, and then, the process returns to the overall processing shown in Figure 17. In the step S81, the processor 81 executes the game processing of moving the enemy character 208, making the enemy character 208 attack the player character 202 or the fellow character (204 or 206), making an item appear, etc. Moreover, in the step S81, the processor 81 controls the position and the direction of the virtual camera 250 based on the positions of the player character 202 and the fellow character (204 or 206), or based on the positions of the player character 202, the fellow character (204 or 206) and the enemy character 208. Furthermore, in the step S81, the processor 81 determines a game clear or game over.

As shown in Figure 22, if the silhouette display judgment processing is started, the processor 81 determines, in a step S201, whether the combination flag 854j is turned on. If "YES" is determined in the step S201, the process proceeds to a step S219 shown in Figure 23. On the other hand, if "NO" is determined in the step S201, in a step S203, the collision judgment is executed, in which it is judged whether each of the first line segment objects 230b connecting each of the first judgment points 230a with the position of the virtual camera 250 collides with one or more first objects.

In a next step S205, it is determined whether the silhouette 220 of the player character 202 is to be displayed. Here, the processor 81 determines whether the number of the first line segment objects 230b that are judged to collide with one or more first objects is two or more.

If "YES" is determined in the step S205, that is, if it is determined that the silhouette 220 of the player character 202 is to be displayed, the first silhouette judgment flag 854k is turned on in a step S207, and the process proceeds to a step S211. However, in a case where the second fellow character 206 is combined with the player character 202, if it is determined that the silhouette 220 of the player character 202 is to be displayed, it is determined that the silhouette 224 of the second fellow character 206 is be displayed.

On the other hand, if "NO" is determined in the step S205, that is, if it is determined that the silhouette 220 of the player character 202 is not to be displayed, the first silhouette judgment flag 854k is turned off in a step S209, and the process proceeds to the step S211.

In the step S211, the collision judgment is executed, in which it is judged whether each of the second line segment objects 232b connecting each of the second judgment points 232a with the position of the virtual camera 250 collides with one or more first objects.

In a next step S213, it is determined whether the silhouette 222 of the first fellow character 204 is to be displayed. Here, the processor 81 determines whether the number of the second line segment objects 232b that are judged to collide with one or more first objects is two or more.

If "YES" is determined in the step S213, that is, if it is determined that the silhouette 222 of the first fellow character 204 is to be displayed, in a step S215, the second silhouette judgment flag 854m is turned on, and the silhouette display judgment processing is ended, and then, the process returns to the overall processing.

On the other hand, if "NO" is determined in the step S213, that is, if it is determined that the silhouette 222 of the first fellow character 204 is not to be displayed, in a step S217, the second silhouette judgment flag 854m is turned off, and the silhouette display judgment processing is ended, and then, the process returns to the overall processing.

As shown in Figure 23, in the step S219, the collision judgment is executed, in which it is judged whether each of the first line segment objects 230b connecting each of the first judgment points 230a with the position of the virtual camera 250 collides with one or more first objects.

In a next step S221, it is determined whether the silhouette 220 of the player character 202 and the silhouette 224 of the second fellow character 206 are to be displayed. Here, the processor 81 determines whether the number of the first line segment objects 230b that are judged to collide with one or more first objects is two or more.

If "YES" is determined in the step S221, that is, if it is determined that the silhouette 220 of the player character 202 and the silhouette 224 of the second fellow character 206 are to be displayed, in a step S223, the third silhouette judgment flag 854n is turned on, and the silhouette display judgment processing is ended, and then, the process returns to the overall processing.

On the other hand, if "NO" is determined in the step S221, that is, if it is determined that the silhouette 220 of the player character 202 and the silhouette 224 of the second fellow character 206 are not to be displayed, in a step S225, the third silhouette judgment flag 854n is turned off, and the silhouette display judgment processing is ended, and then, the process returns to the overall processing.

According to this embodiment, it is judged whether the silhouettes of the player character and the first fellow character are to be displayed only by judging whether each of the line segment objects connecting each of the multiple judgment points on each of the judgment objects that are set to respectively surround the player character and the first fellow character with the position corresponding to the virtual camera collide one or more first objects, and therefore, it is possible to judge whether the silhouette is to be displayed by simple processing. Moreover, even when it is judged that the silhouette is to be displayed, the silhouette is displayed only when actually hidden by the first object, i.e., the background object or the enemy character, and therefore, it is possible to suppress a display opportunity of the silhouette.

In addition, in the above-described embodiment, when it is judged that the silhouette is to be displayed, processing to immediately generate the game image including the silhouette is executed, but it does not need to be limited to this. When it is judged that the silhouette is to be displayed and such a state is continued for a second predetermined time period (e.g., one (1) second), the processing to generate the game image including the silhouette may be executed.

Specifically, in the silhouette display judgment processing, the processor 81 does not execute immediately the step S207 even when determining "YES" in the step S205, and starts a count for the second predetermined time period in parallel with the silhouette display judgment processing, and may execute the processing in the step S207 when not determining "NO" in the step S205 until the count for the second predetermined time period is completed. Similarly, in the silhouette display judgment processing, the processor 81 does not execute immediately the step S215 even when determining "YES" in the step S213, and starts a count for the second predetermined time period in parallel with the silhouette display judgment processing, and may execute the processing in the step S215 when not determining "NO" in the step S213 until the count for the second predetermined time period is completed. Similarly, in the silhouette display judgment processing, the processor 81 does not execute immediately the step S223 even when determining "YES" in the step S221, and starts a count for the second predetermined time period in parallel with the silhouette display judgment processing, and may execute the processing in the step S223 when not determining "NO" in the step S221 until the count for the second predetermined time period is completed.

According to such processing, it is possible to prevent the silhouette from being displayed when, for example, the player character or the first fellow character crosses behind the background object just for a moment such as a thick tree. Moreover, a reason why the second predetermined time period is set as one (1) second, for example is that if the second predetermined time period is too short, the silhouette is displayed even when the player character or the first fellow character crosses behind the background object just for a moment, the game screen flickers and it is difficult to play the virtual game, whereas, if the second predetermined time period is too long, there may cause inconvenience of losing sight of the position of the character and being attacked by the enemy character from an unseen location.

Moreover, although an orange silhouette and a purple silhouette are displayed in the above-described embodiment, the silhouette may be displayed gradually according to a time elapse (i.e., in a manner that a transparency of the silhouette is gradually decreased). In this case, a rate that the transparency is decreased may be gradually increased. As an example, the silhouette is displayed in a light orange, which is darkened according to a time elapse, i.e., its transparency is decreased, and then, is changed to orange. Moreover, the silhouette is displayed in a light purple, which is darkened according to a time elapse, and then, is changed to purple. When displaying the silhouette immediately after the character is hidden behind an object, the silhouette naturally becomes large as hiding area spreads; however, if the silhouette is displayed when the judgment that the silhouette is to be displayed is continued for the second predetermined time period, the silhouette is displayed when the character is hidden to some extent. In this case, the silhouette of approximately 1/3 of the character, for example is suddenly displayed, which may make the player feel uncomfortable, but by displaying the silhouette gradually, such discomfort can be alleviated.

Furthermore, although a shape of the judgment object is fixed in the above-described embodiment, if a size or shape of the character is changed when the corresponding character is made to execute an action, the shape of the judgment object may be changed. When a size of the character is temporarily made large or small, when a size or shape of the character differs when its wings are spread or when they are folded, as in the case of a character imitating a bird, for example, the size or shape of the judgment object is changed.

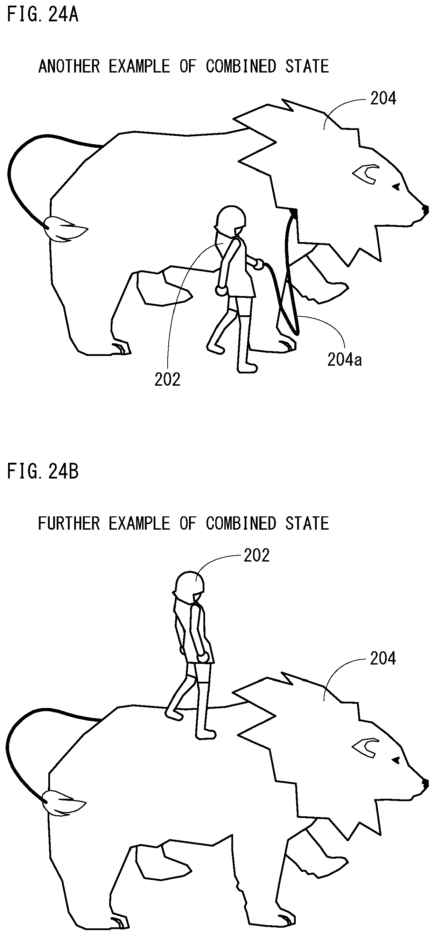

Furthermore, in the above-described embodiment, as an example of a case where the player character and the second fellow character are combined with each other, the first fellow character is transformed into the second fellow character that is held by the player character in his/her arms, but it does not need to be limited to this. As shown in Figure 24A, in an example of the combined state, the first fellow character 204 is not transformed, and the player character 202 is combined with the first fellow character 204 by holding a rope 204a extending from a collar attached to the first fellow character 204, and the player character 202 and the first fellow character 204 may be moved together. Moreover, as shown in Figure 24B, in another example of the combined state, the first fellow character 204 is not transformed, and the player character 202 is combined with the first fellow character 204 by riding on the first fellow character 204, and the player character 202 and the first fellow character 204 may be moved together. In Figure 24B, although the player character 202 stands on the first fellow character 204, it may straddle on the first fellow character 204. Even in the combined state as shown in Figure 24A or Figure 24B, the player character 202 overlaps, contacts or be connected with the second object such as the fellow character.

As seen from Figure 24A and Figure 24B, the first fellow character 204 is larger than the player character 202. In such a case, in the combined state, instead of execution of the silhouette display judgment for the player character 202, the silhouette display judgment whether the silhouette 222 of the first fellow character 204 is to be displayed may be executed, and according to a judgment result, it may be judged whether the silhouette 220 of the player character 202 and the silhouette 222 of the first fellow character 204 are to be displayed. That is, only the silhouette display judgment using the second judgment points 232a set to the second judgment object 232 of the first fellow character 204 is executed. In this case, the second multiple judgment points 232a for the silhouette display judgment of the first fellow character 204 in the separated state and multiple judgment points (equivalent to "third judgment points") for silhouette display judgment of the player character 202 and the fist fellow character 204 in the combined state are the same.

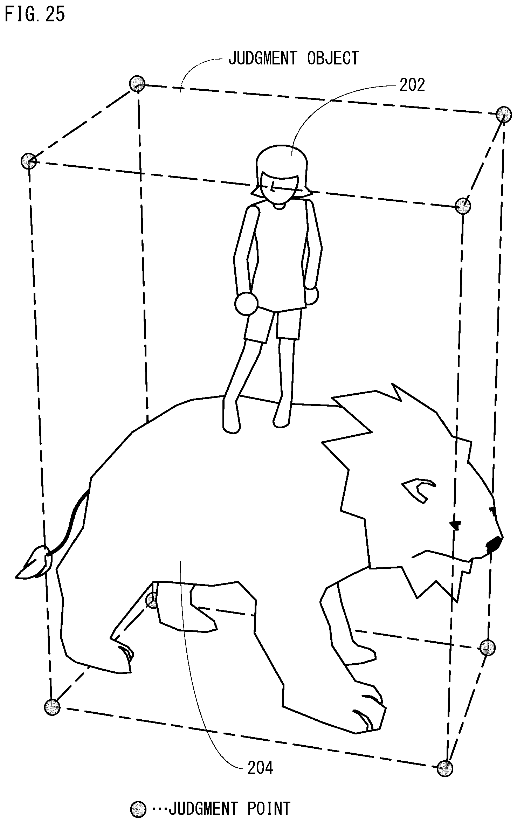

Moreover, when making the player character and the first fellow character be combined state without transforming the first fellow character as shown in Figure 24A and Figure 24B, a judgment object (equivalent to "third judgment object") may be set to surround both the player character and the first fellow character. Figure 25 is a view showing a non-limiting example third judgment object set to the player character 202 and the first fellow character 204 being in the combined state shown in Figure 24B. The third judgment object is a colorless and transparent object and of a rectangular parallelepiped, the multiple judgment points (equivalent to "thirst judgment points") are set to respective vertices. The third judgment object 232 is a box-shaped object having a center position determined according to a position of the designated one joint of the player character 202 or the first fellow character 204 and a size capable of just barely covering the player character 202 and the first fellow character 204. Even if setting such the third judgment object, it is possible to perform a silhouette display judgment at once on both the player character 202 and the first fellow character 204. That is, it is possible to prevent the processing from being complicated.

However, even in a case where the silhouette display judgment is performed for both the player character 202 and the first fellow character 204 using the third judgment object, only the silhouette 220 of the player character 202 or the silhouette 222 of the first fellow character 204 may be displayed. Moreover, it may be judged whether the silhouette 220 of the player character 202 and the silhouette 222 of the first fellow character 204 are to be displayed by performing a further additional judgment in addition to the silhouette display judgment using the third judgment points.

Furthermore, although the player character combined with or separated from the fellow character in the above-described embodiment, it does not need to be limited to this. The player character may be combined with an object of an item by possessing or equipping the item arranged in the virtual space, or may be separated from the object of the item by parting with the item. For example, when arms fallen in the virtual space are hidden behind the first object, it is possible to notify to the player that the arms is fallen behind the first object by displaying a silhouette of the arms. In this case, the second judgment object is set to the item in the separated state so as to surround the item, whereby performing the silhouette display judgment.

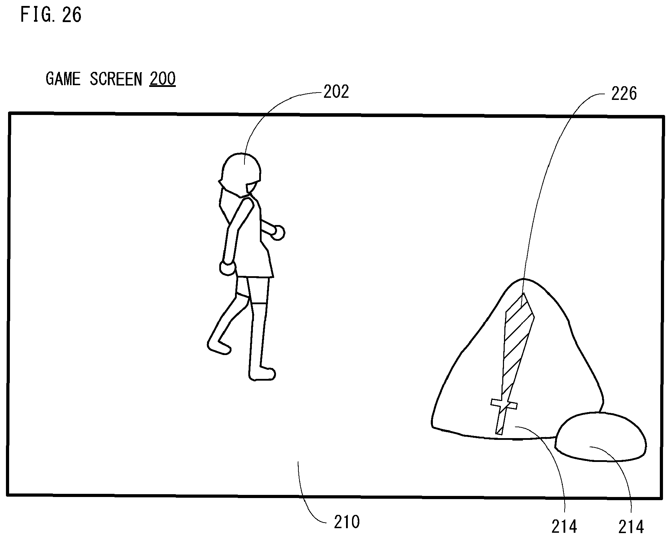

A game image shown in Figure 26 is a view showing another non-limiting example game screen 200. In an example shown in Figure 26, an object 240 of arms such as a sword is arranged behind the rock background object 214, and a silhouette 226 of the sword is displayed on the front face of the rock background object 214. Moreover, in the game screen 200 shown in Figure 26, the player character 202 is located in the left from the center of the screen.

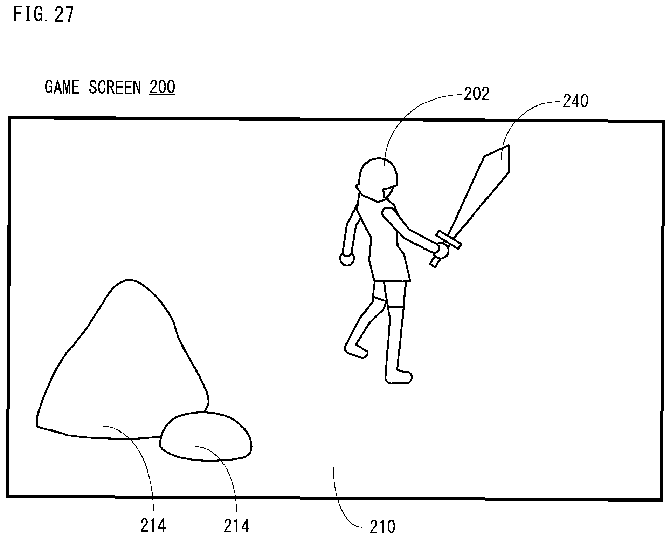

A game image shown in Figure 27 is a view showing a further non-limiting example game screen 200. The game screen 200 of Figure 27 shows, in the game screen 200 shown in Figure 26, a state that the player character 202 acquires the sword object 240 and is moved rightward with holding the acquired sword object 240. That is, Figure 27 shows the combined state of the player character 202 and the sword object 240.

Although illustration is omitted, similar to the above-described embodiment, in the combined state, it is judged whether the silhouette 220 of the player character 202 and the silhouette 226 of the sword object 240 are to be displayed according to a judgment result of the silhouette display judgment whether the silhouette 220 of the player character 202 is to be displayed. However, in the combined state, the silhouette display judgment for the player character 202 and the sword object 240 may be performed at once using the third judgment object surrounding the player character 202 and the sword object 240.

In addition, although the arms such as the sword object 240 is shown as an example of an item in Figure 26 and Figure 27, it does not need to be limited to this. The same is true for other items such as a protector, shoes, a glove, a hat, medicines, and a coin(s).

Moreover, when the enemy character or arms used by the enemy character (e.g., a whip) clings around (or wraps around) the player character, the player character and the enemy character become in the combined state, and therefore, if it is judged that the silhouette of the player character is to be displayed, the silhouette is displayed not only for the player character hiding behind the first object but also for the enemy character.

Moreover, although a case where the fellow character is combined with or separated from the player character is described in the above-described embodiment, it does not need to be limited to this. No transformation is performed between the first fellow character and the second fellow character, and they may be different fellow characters, respectively. As an example, the operation state is capable of being changed between the separated state and the combined state, and the first fellow character appears in the virtual space as a fellow character of the payer character in the separated state, and the second fellow character appears in the virtual space as a fellow character of the player character in the combined state.

Furthermore, although the player operates an action of the fellow character in the above-described embodiment, the fellow character may operate automatically.

Moreover, although a case where the player character and the fellow character are moved on the ground is described in the above-described embodiment, it is possible to determine a silhouette to be display by performing the silhouette display judgment also in a case where the player character and the fellow character are moved in the underwater or the air.

In addition, although the game system 1 is shown as an example of a game system in the above-described embodiment, its configuration should not be limited, and other configurations may be adopted. For example, in the above-described embodiment, the above-described "computer" is a single computer (specifically, the processor 81), but it may be a plurality of computers in other embodiments. The above-described "computer" may be a plurality of computers provided in a plurality of apparatuses, for example, and more specifically, the above-described "computer" may be constituted by the processor 81 of the main body apparatus 2 and the communication control sections (microprocessor) 101 and 111 provided on the controllers.

Moreover, although a case where the game image is displayed on the display 12 is described in the above-described embodiment, it does not need to be limited to this. The game image can be displayed also on a stationary monitor (e.g., television monitor) by connecting the main body apparatus 2 to the stationary monitor via a cradle. In such a case, it is possible to constitute a game system including the game system 1 and the stationary monitor.

Furthermore, although the above-described embodiment are described on a case where the game system 1 having structure that the left controller 3 and the right controller 4 are attachable to or detachable from the main body apparatus 2 is used, it does not need to be limited to this. For example, it is possible to use a game apparatus including the main body apparatus 2 integrally provided with an operation portion having operation buttons and analog sticks similar to those of the left controller 3 and the right controller 4, or a game apparatus such as further electronic equipment capable of executing a game program. The further electronic equipment corresponds to smartphones, tablet PCs or the like. In such a case, an operation portion may constitute with software keys.

Furthermore, specific numeral values and images shown in the above-described embodiment are mere examples and can be appropriately changed according to actual products.

Although the embodiments according to the disclosure have been described, the disclosed embodiments are merely examples and do not attempt to limit the scope thereof. The scope of this disclosure is indicated by the appended claims, and changes can be made without departing from the scope of this disclosure.

## Claims

1. A game program executable by an information processing apparatus (2) comprising one or more processors (81), wherein the game program causes the one or more processors (81) to execute:
moving (S53) a player character (202) in a virtual space based on an operation input of a player;
moving (S55, S67), according to movement of the player character (202), multiple first judgment points (230a) set to positions based on the player character (202);
generating (S9), based on a virtual camera (250) in the virtual space, a display image (200) including the player character (202) and one or more first objects (208, 210, 212, 214);
executing (S203) collision judgment whether line segments (230b) each connecting each of the multiple first judgment points (230a) to a position corresponding to the virtual camera (250) collide with the one or more first objects (208, 210, 212, 214), respectively; and
generating (S9), based on a result of the collision judgment, a display image (200) including a silhouette (220) corresponding to a part of the player character (202) hidden behind the one or more first objects (208, 210, 212, 214) when viewed from the virtual camera (250).

2. The game program according to the claim 1, wherein the game program causes the one or more processors (81) to execute determining (S9) a shape of the silhouette (220) to be displayed based on a result of a front-rear judgment that is different from the collision judgment.

3. The game program according to the claim 1 or 2, wherein the game program causes the one or more processors (81) to execute moving (S55, S67), according to the movement of the player character (202), an invisible first judgment object (230) that is invisible by a player and has the multiple first judgment points (230a).

4. The game program according to the claim 3, wherein the invisible first judgment object (230) is a rectangular parallelepiped, the invisible first judgment object (230) having each of the multiple first judgment points (230a) at each of respective vertices of the rectangular parallelepiped,
wherein the game program causes the one or more processors (81) to execute generating (S9) the display image (200) including the silhouette (220) when the number of line segments (230b) that are judged to collide is two or more as a result of the collision judgment.

5. The game program according to any one of the claims 1 to 4, wherein the game program causes the one or more processors (81) to execute:
generating (S9) the display image (200) including a second object (204 or 206) together with the player character (202) and the one or more first objects (208, 210, 212, 214) in the virtual space;
moving (S55, S67), according to a movement of the second object (204), multiple second judgment points (232a) that are set to positions based on the second object (204);
further executing (S203, S219) collision judgment whether line segments (230b) each connecting each of the multiple second judgment points (232a) to the position corresponding to the virtual camera (250) collide with the one or more first objects (208, 210, 212, 214), respectively;
moving (S53), when a predetermined condition is satisfied, the player character (202) together with the second object (206) in a combined state that at least a part of the player character (202) is overlapped or contacted with the second object (206) while maintaining the combined state;
moving (S55, S67), according to movement of the player character (202) and the second object (206), multiple third judgment points (230a or 232a) that are set positions based on the player character (202) and the second object (206) in the combined state;
further executing (S203, S219) collision judgment whether line segments (230b) each connecting each of the multiple third judgment points (230a or 232a) to the position corresponding to the virtual camera (250) collide with the one or more first objects (208, 210, 212, 214), respectively; and
generating (S9), based on the collision judgment, the display image (200) including the silhouette (220, 224) corresponding to a portion of both the player character (202) and the second object (206) hidden behind the one or more first objects (208, 210, 212, 214) when viewed from the virtual camera (250).

6. The game program according to the claim 5, wherein the third judgment points (230a or 232a) are the same as the first judgment points (230a).

7. The game program according to the claim 5 or 6, wherein the game program causes the one or more processors (81) to execute generating the display image (200) including the payer character and silhouette (220) of the second object (206) when the line segments (230b) each connecting each of the multiple third judgment points (230a or 232a) to the position corresponding to the virtual camera (250) collide with one or more first objects (208, 210, 212, 214) in the combined state.

8. The storage medium according to the claim 6, wherein the game program causes the one or more processors (81) to execute:
further moving (S55, S67), according to movement of the second object (204), an invisible second judgment object (232) that is invisible by the player and has the multiple second judgment points (232a); and
moving (S55, S67), according to movement of the player character (202) and the second object (206), the invisible third judgment object (230 or 232) having the multiple third judgment points (230a or 232a) in the combined state.

9. The game program according to any one of the claims 1 to 8, wherein the game program causes the one or more processors (81) to execute increasing a rate of decrease in transparency of the silhouette (220) gradually with a time elapse.

10. A game system (1) comprising one or more processors (81), wherein in the game processing, the one or more processors (81) is configured to execute:
moving (S53) a player character (202) in a virtual space based on an operation input of a player;
moving (S55, S67), according to movement of the player character (202), multiple first judgment points (230a) set to positions based on the player character (202);
generating (S9), based on a virtual camera (250) in the virtual space, a display image (200) including the player character (202) and one or more first objects (208, 210, 212, 214);
executing (S203) collision judgment whether line segments (230b) each connecting each of the multiple first judgment points (230a) to a position corresponding to the virtual camera (250) collide with the one or more first objects (208, 210, 212, 214), respectively; and
generating (S9), based on a result of the collision judgment, a display image (200) including a silhouette (220) corresponding to a part of the player character (202) hidden behind the one or more first objects (208, 210, 212, 214) when viewed from the virtual camera (250).

11. The game system (1) according to the claim 10, wherein the one or more processors (81) is configured to execute:
judging (S9), based on a result of the collision judgment, whether the display image (200) including the silhouette (220) is to be generated; and
starting (S9) generation of the display image (200) including the silhouette (220) after elapsing a predetermined time period when it is determined that the display image (200) including the silhouette (220) is to be generated.

12. The game system (1) according to the claim 10 or 11, wherein the one or more processors (81) is configured to execute generating (S9) the display image (200) so that the silhouette (220) is gradually displayed with a time elapse.

13. A game control method of a game apparatus (2), wherein the game control method comprising:
moving (S53) a player character (202) in a virtual space based on an operation input of a player;
moving (S55, S67), according to movement of the player character (202), multiple first judgment points (230a) set to positions based on the player character (202);
generating (S9), based on a virtual camera (250) in the virtual space, a display image (200) including the player character (202) and one or more first objects (208, 210, 212, 214);
executing (S203) collision judgment whether line segments (230b) each connecting each of the multiple first judgment points (230a) to a position corresponding to the virtual camera (250) collide with the one or more first objects (208, 210, 212, 214), respectively; and
generating (S9), based on a result of the collision judgment, a display image (200) including a silhouette (220) corresponding to a part of the player character (202) hidden behind the one or more first objects (208, 210, 212, 214) when viewed from the virtual camera (250).

14. The game control method according to the claim 13, wherein the game control method further comprising judging (S9), based on a result of the collision judgment, whether the display image (200) including the silhouette (220) is to be generated; and
starting (S9) generation of the display image (200) including the silhouette (220) after elapsing a predetermined time period when it is determined that the display image (200) including the silhouette (220) is to be generated.

15. The game control method according to the claim 13 or 14, wherein the game control method further comprising generating (S9) the display image (200) so that the silhouette (220) is gradually displayed with a time elapse.
